(19) **Europäisches Patentamt / European Patent Office / Office européen des brevets**

(11) **EP 4 734 622 A1**

(12) **EUROPEAN PATENT APPLICATION**
published in accordance with Art. 153(4) EPC

(43) Date of publication:
**29.04.2026 Bulletin 2026/18**

(21) Application number: **24832329.7**

(22) Date of filing: **12.06.2024**

(51) International Patent Classification (IPC):
$H04W\ 64/00\ ^{(2009.01)}$    $G01S\ 5/00\ ^{(2006.01)}$
$H04W\ 48/14\ ^{(2009.01)}$    $H04W\ 56/00\ ^{(2009.01)}$
$H04W\ 88/04\ ^{(2009.01)}$    $H04W\ 92/18\ ^{(2009.01)}$

(52) Cooperative Patent Classification (CPC):
G01S 5/00; H04W 48/14; H04W 56/00;
H04W 64/00; H04W 88/04; H04W 92/18

(86) International application number:
**PCT/KR2024/008077**

(87) International publication number:
**WO 2025/005549 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.06.2023 KR 20230084382**

(71) Applicant: **Samsung Electronics Co., Ltd.**
**Suwon-si, Gyeonggi-do 16677 (KR)**

(72) Inventors:
• **LEE, Taeseop**
  **Suwon-si, Gyeonggi-do 16677 (KR)**
• **KANG, Hyunjeong**
  **Suwon-si, Gyeonggi-do 16677 (KR)**
• **YU, Jeongseok**
  **Suwon-si, Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND APPARATUS FOR ESTIMATING LOCATION OF USER EQUIPMENT IN WIRELESS COMMUNICATION SYSTEM**

(57)    The disclosure relates to a 5G or 6G communication system for supporting a higher data transmission rate. The present disclosure relates to positioning of a user equipment in a wireless communication system and, more particularly, to a method and an apparatus for servicing positioning of the user equipment, which operates as a L2 UE-to-network remote UE.

**EP 4 734 622 A1**

FIG.9

**Description**

[Technical Field]

The disclosure relates to positioning of a user equipment (UE) in a wireless communication or mobile communication system. More specifically, the disclosure relates to a method and an apparatus for servicing positioning of a UE operating as a layer 2 (L2) UE-to-network remote UE.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure of Invention]

[Technical Problem]

Based on the discussion as described above, the disclosure provides an apparatus and a method capable of effectively providing services in a wireless communication system.

[Solution to Problem]

In order to solve the above-described problems, the disclosure provides an operation method of a relay node in a wireless communication system, the method including receiving a request for positioning from a first node, transmitting, based on the request, positioning-related configuration information received from the second node to the first node, receiving, based on the configuration information, a request for time synchronization information from the first node, and transmitting configuration information including the time synchronization information to the first node.

[Advantageous Effects of Invention]

The disclosure provides an apparatus and a method capable of effectively providing services in a wireless communication system.

[Brief Description of Drawings]

FIG. 1 illustrates a structure of an NR system according to an embodiment of the disclosure.
FIG. 2 illustrates a radio protocol structure in LTE and NR systems according to an embodiment of the disclosure.
FIG. 3 illustrates a network structure for providing a UE location service (LCS) according to an embodiment of the disclosure.
FIG. 4 is a flowchart illustrating a process of performing LCS according to an embodiment of the disclosure.
FIG. 5 is a flowchart illustrating an LTE positioning protocol (LPP) message exchange process according to an embodiment of the disclosure.
FIG. 6 illustrates a positioning service scenario for a layer 2 (L2) UE-to-network remote UE according to an embodiment of the disclosure.
FIG. 7 is a flowchart illustrating a process of exchanging an LPP message for positioning of an L2 UE-to-network remote UE according to an embodiment of the disclosure.
FIG. 8 is a flowchart illustrating a process in which an L2 UE-to-network remote UE receives assistance information required for positioning in a radio resource control (RRC)_IDLE/RRC_INACTIVE state according to an embodiment of the disclosure.
FIG. 9 is a flowchart illustrating a process in which an L2 UE-to-network remote UE receives assistance information necessary for positioning in an RRC _CONNECTED state according to an embodiment of the disclosure.
FIG. 10 illustrates a UE device according to an embodiment of the disclosure.
FIG. 11 illustrates a base station device according to an embodiment of the disclosure.

[Mode for the Invention]

Hereinafter, embodiments of the disclosure will be described in detail with reference to the accompanying drawings. In addition, a detailed description of known functions or configurations that may make the subject matter of the disclosure unclear will be omitted. The terms which will be described below are terms defined in consideration of the functions in the disclosure, and may be different according to users, intentions of the users, or customs. Therefore, the definitions of the terms should be made based on the contents throughout the specification.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description, the terms "physical channel" and "signal" may be interchangeably used with the term "data" or "control signal". For example, the term "physical downlink shared channel (PDSCH)" refers to a physical channel over which data is transmitted, but the PDSCH may also be used to refer to the "data". That is, in the disclosure, the expression "transmit ting a physical channel" may be construed as having the same meaning as the expression "transmitting data or a signal over a physical channel".

In the following description of the disclosure, upper signaling refers to a signal transfer scheme from a base station to a terminal via a downlink data channel of a physical layer, or from a terminal to a base station via an uplink data channel of a physical layer. The upper signaling may also be understood as radio resource control (RRC) signaling or a media access control (MAC) control element (CE).

In the following description of the disclosure, terms and names defined in the 3rd generation partnership project new radio (3GPP NR) or 3GPP long term evolution (3GPP LTE) standards will be used for the sake of descriptive convenience. However, the disclosure is not limited by these terms and names, and may be applied in the same way to systems that conform other standards. In the disclosure, the term "gNB" may be interchangeably used with the term "eNB" for the sake of descriptive convenience. That is, a base station described as "eNB" may refer to "gNB". Furthermore, the term "terminal" may refer to not only a mobile phone, an MTC device, an NB-IoT device, and a sensor, but also other wireless communication devices.

In the following description, a base station is an entity that allocates resources to terminals, and may be at least one of a gNode B (gNB), an eNode B (eNB), a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

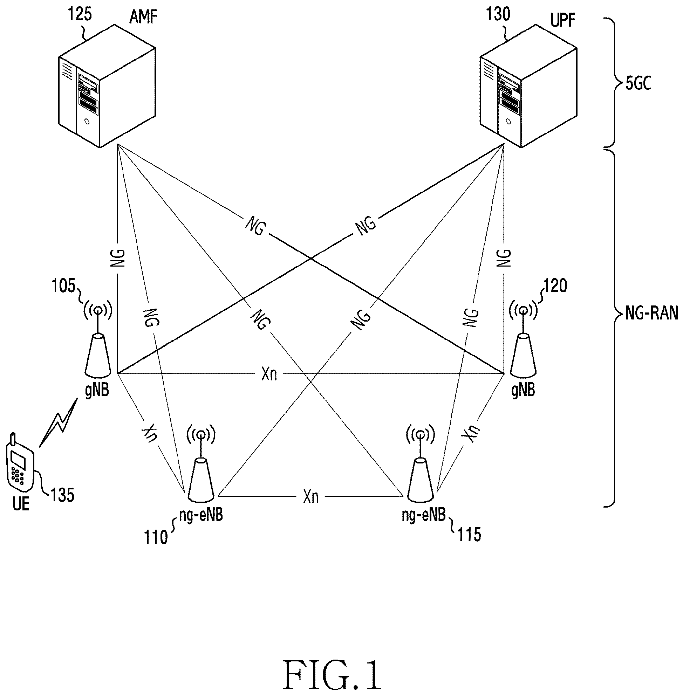

FIG. 1 illustrates a structure of an NR system according to an embodiment of the disclosure.

Referring to FIG. 1, a wireless communication system may include multiple base stations (e.g., a gNB 105, an ng-eNB 110, an ng-eNB 115, and a gNB 120), an access and mobility management function (AMF) 125, and a user plane function (UPF) 130. A user equipment (hereinafter UE or terminal) 135 may access an external network through the base stations (e.g., the gNB 105, the ng-eNB 110, the ng-eNB 115, and the gNB 120) and the UPF 130.

In FIG. 1, the base stations (e.g., the gNB 105, the ng-eNB 110, the ng-eNB 115, and the gNB 120) may provide radio access to UEs accessing the network as cellular network access nodes. That is, in order to service users' traffic, the base stations (e.g., the gNB 105, the ng-eNB 110, the ng-eNB 115, and the gNB 120) may collect state information of UEs, such as the buffer states, available transmission power states, and channel states, and perform scheduling accordingly, thereby supporting connections between the UEs and the core network (CN; in particular, CN in NR is referred to as "5GC"). In communication, a user plane (UP) related to actual user data transmission and a control plane (CP) such as connection management may be separately configured. In FIG. 1, the gNB 105 and gNB 120 may use UP and CP technology defined in the NR technology, and although connected to the 5GC, the ng-eNB 110 and ng-eNB 115 may use UP and CP technology defined in the long term evolution (LTE) technology.

The AMF 125 is a device responsible for various control functions as well as a mobility management function for a UE and may be connected to multiple base stations, and the UPF 130 may refer to a type of gateway device for providing data transmission. Although not illustrate in FIG. 1, the NR wireless communication system may include a session management function (SMF). The SMF may manage a packet data network connection such as a protocol data unit (PDU) session provided to the UE.

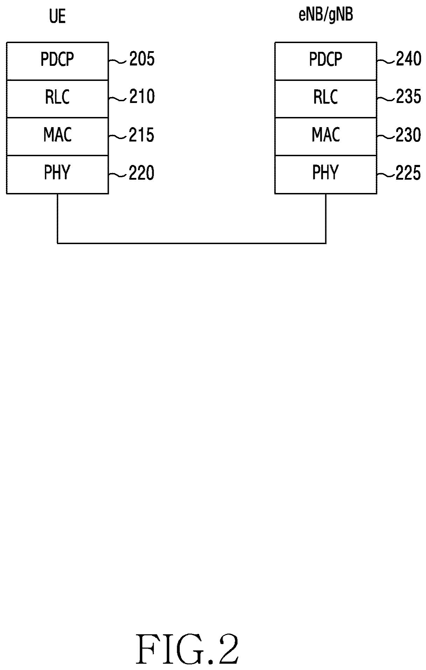

FIG. 2 illustrates a radio protocol structure in LTE and NR systems according to an embodiment of the disclosure.

Referring to FIG. 2, a radio protocol of an LTE system may include a packet data convergence protocol (PDCP) 205 or 240, a radio link control (RLC) 210 or 235, and a medium access control (MAC) 215 or 230 on each of UE and ENB sides. The packet data convergence protocol (PDCP) 205 or 240 is responsible for operations such as IP header compression/reconstruction, and the radio link control (hereinafter referred to as "RLC") 210 or 235 reconfigures a PDCP protocol data unit (PDU) into appropriate sizes. The MAC 215 or 230 is connected to several RLC layer devices configured in a single UE, and performs operations of multiplexing RLC PDUs into an MAC PDU and demultiplexing RLC PDUs from an MAC PDU. A physical (PHY) layer 220 or 225 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer. For additional error correction, the PHY layer also uses hybrid ARQ (HARQ), and a receiving end uses one bit to transmit whether a packet transmitted by a transmitting end is received. This is referred to as HARQ AQCK/NACK information. In the case of LTE, downlink HARQ ACK/NACK information in response to uplink data transmission may be transmitted via a physical ARQ indicator channel (PHICH), and in the case of NR, whether retransmission is required or new transmission has only to be performed may be determined through UE scheduling information via a physical dedicated control channel (PDCCH) that is a channel via which downlink/uplink resource allocation and the like are transmitted. This is because asynchronous HARQ is applied in NR. Uplink HARQ ACK/NACK information in response to downlink data transmission may be transmitted through a physical uplink control channel (PUCCH) or through a physical uplink shared channel (PUSCH). The PUCCH is generally transmitted in an uplink of a PCell as described below, but if supported by a UE, a base station may also additionally transmit the same to the corresponding UE in an SCell as described below, which is referred to as a PUCCH SCell.

Although not illustrated in FIG. 2, a radio resource control (RRC) layer may exist as a higher layer than each PDCP layer of the UE and the base station, and the RRC layer may exchange access and measurement-related configuration control messages for radio resource control.

The PHY layer may include one or multiple frequencies/carriers. A technology for simultaneously configuring and using multiple frequencies is referred to as carrier aggregation (hereinafter referred to as "CA"). In the case of using the CA, instead of using only one carrier for communication between a user equipment (UE) and a base station (E-UTRAN node B (eNB)), one primary carrier and multiple secondary carriers are additionally used and thus data capacity can be greatly increased as much as the number of secondary carriers. In the LTE and NR systems, a cell in a base station, which uses the primary carrier, may be referred to as a primary cell or PCell, and a cell in a base station, which uses the secondary carrier, may be referred to as a secondary cell or SCell.

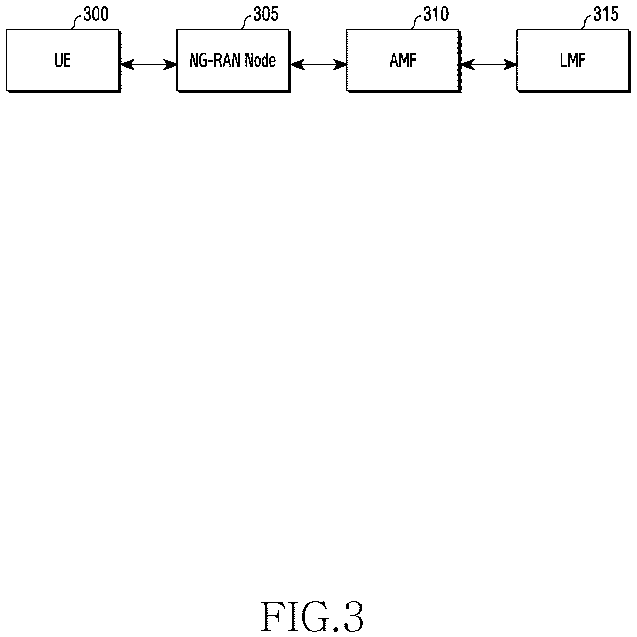

FIG. 3 illustrates a network structure for providing a UE location service (LCS) in a wireless communication system (or a mobile communication system) according to an embodiment of the disclosure.

Referring to FIG. 3, a network for providing an LCS in a wireless communication system (or a mobile communication system) includes a UE 300, a base station (NG-RAN node) 305, an access and mobility function (AMF) 310, and a location management function (LMF) 315. In this case, the UE 300 may communicate with the LMF 315 through the base station 305 and the AMF 310, and may exchange information necessary for positioning. The role for each element for LCS provision is as follows.

The UE 300 may perform a function of measuring a radio signal necessary for positioning and transferring the result to the LMF 315.

The base station 305 may perform a role of transmitting a downlink radio signal required for positioning, measuring an uplink radio signal transmitted by the target UE, etc.

The AMF 310 may perform a role of receiving an LCS request message from an LCS requester, forwarding the same to the LMF 315, and instructing the LMF 315 to provide a location provision service. When the LMF 315 processes the positioning request, and then responds with the positioning result of the UE, the AMF 310 may transfer the corresponding result to the LCS requester.

The LMF 315 is a device that receives and processes an LCS request from the AMF 310, and may perform a role of controlling the entire process necessary for positioning. For UE positioning, the LMF 315 may provide the UE 300 with assistance information necessary for positioning and signal measurement, and may receive a result value. In this case, an LTE positioning protocol (LPP) may be used as a protocol for data exchange. The LPP may define a message specification exchanged between the UE 300 and the LMF 315 for a positioning service. In addition, the LMF 315 may exchange, with the base station 305, downlink reference signal (positioning reference signal, hereinafter, referred to as "PRS") configuration information to be used for positioning and uplink reference signal (sounding reference signal, hereinafter, referred to as "SRS") measurement results. In this case, an NR positioning protocol A (NRPPa) may be used as a protocol for data exchange, and the NRPPa may define a message specification exchanged between the base station 305 and the LMF 315. Hereinafter, a terminal in the embodiments of the disclosure may be used as having the same meaning as a UE, and a base station (or NG-RAN node) may be used as having the same meaning as at least one of a gNB and an eNB.

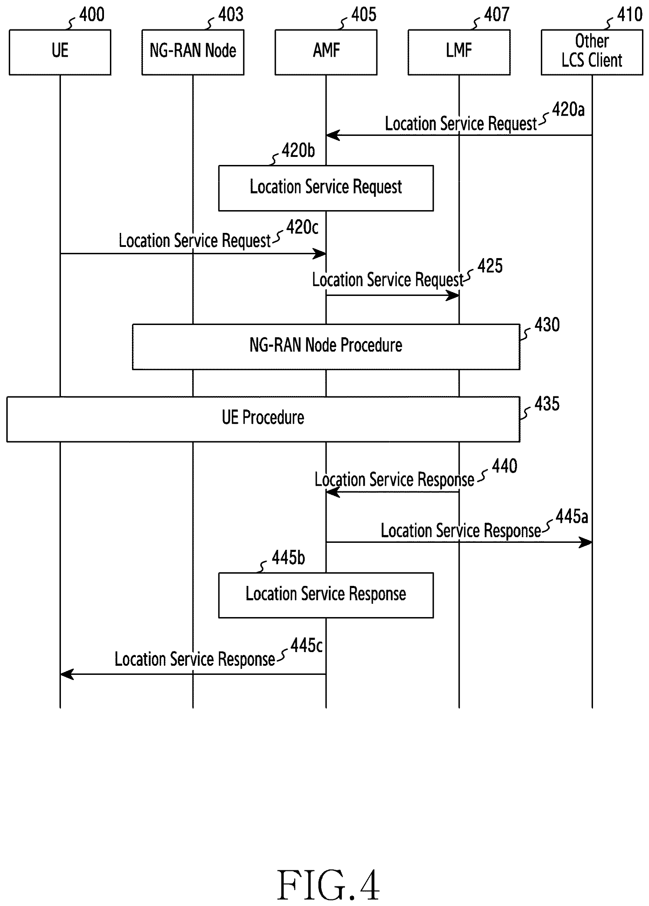

FIG. 4 is a flowchart illustrating a process of performing LCS according to an embodiment of the disclosure.

Referring to FIG. 4, in operations 420a to 420c, an AMF 405 may receive an LCS Request 420a/b/c from the other LCS client 410 and a UE 400, respectively.

In operation 425, the AMF 405 may transfer the LCS request 420a/b/c to an LMF 407.

In operations 430 and 435, the LMF 407 may control a process of exchanging necessary information with the UE (e.g., UE 400) and a base station (e.g., NG-RAN node 403) in order to process the LCS request 420a/b/c.

In operation 440, the LMF 407 may transfer a result value (e.g., a positioning result) acquired in operations 430 and 435 to the AMF 405.

In operations 445a to 445c, the LCS execution may be completed by the AMF 405 transferring the result value (e.g., LCS Response 445a/b/c) to the target that requested the LCS.

Specifically, there may be three types of LCS requests received by the AMF 405 in operation 420.

1. LCS request 420a received from external LCS client 410
2. LCS Request 420b generated by AMF 405 itself
3. LCS Request 420c received from UE 400

The LCS request may include at least one of an identity (ID) of the LCS target UE or LCS quality of service (QoS) request information (for example, including at least one of requirements for positioning accuracy or delay time).

After receiving one of the three types of LCS requests, the AMF 405 may request the positioning service by transmitting a location service request message to the LMF 407 (in operation 425). Thereafter, in the NG-RAN Node procedure operation (operation 430), the LMF 407 may proceed with a procedure (for example, including at least one of base station PRS configuration or base station SRS measurement information acquisition) necessary for positioning through NRPPa message exchange with the NG-RAN node 403. In addition, in the UE procedure operation (operation 435), the LMF 407 may exchange LPP messages to exchange necessary information with the UE 400. Through the UE procedure operation (operation 435), the LMF 407 may perform at least one procedure among exchanging UE capability information related to positioning, delivering assistance information for signal measurement of the UE, and requesting and obtaining UE measurement results. If the LMF 407 determines, based on the obtained multiple measurement results, an estimated location of the UE, the LMF 407 may transfer a location service response message to the AMF 405 (operation 440). The AMF 405 may deliver the LCS response message 445a/b/c to the target that requested the LCS, and the LCS response message 445a/b/c may include the UE positioning result.

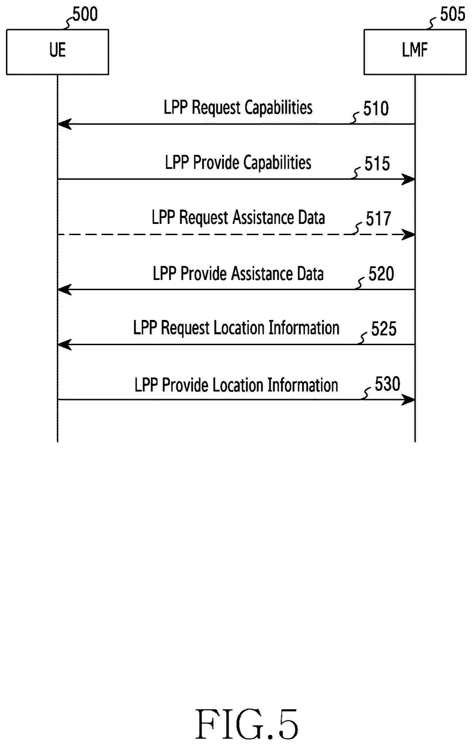

FIG. 5 is a flowchart illustrating an LTE positioning protocol (LPP) message exchange process according to an embodiment of the disclosure.

Referring to FIG. 5, a specific LPP message exchange procedure in the UE procedure operation (that is, operation 435) illustrated in FIG. 4 will be described. The process in which the LMF 505 exchanges UE capability information related to positioning with the UE 500, transfers assistance information for signal measurement of the UE, and proceeds with a procedure of requesting UE measurement results and acquiring the same is illustrated. The purpose and definition of each LPP message exchanged in each operation may be as follows. The purpose and definition of each LPP message is not limited to the example below.

LPP Request Capabilities (LMF → UE 110): The LPP Request Capabilities message may be used for the LMF 505 to request UE capability information related to positioning from the UE 500. The information included in the LPP Request Capabilities message may be defined as in Table 1 below. A request for common information, which is irrelevant to the positioning scheme (e.g., GNSS, OTDOA, or ECID), may be included in CommonIEsRequestCapabilities. In addition, information requests additionally required for each positioning scheme may be included in a separate information element (IE) according to the method.

[Table 1]

```
RequestCapabilities ::= SEQUENCE {
   criticalExtensions      CHOICE {
      c1                      CHOICE {
         requestCapabilities-r9      RequestCapabilities-r9-IEs,
         spare3 NULL, spare2 NULL, spare1 NULL
      },
      criticalExtensionsFuture     SEQUENCE {}
   }
}

RequestCapabilities-r9-IEs ::= SEQUENCE {
   commonIEsRequestCapabilities       CommonIEsRequestCapabilities       O
   a-gnss-RequestCapabilities         A-GNSS-RequestCapabilities         O
   otdoa-RequestCapabilities          OTDOA-RequestCapabilities          O
   ecid-RequestCapabilities           ECID-RequestCapabilities           O
   epdu-RequestCapabilities           EPDU-Sequence                      O
   ...,
   [[  sensor-RequestCapabilities-r13   Sensor-RequestCapabilities-r13    O
       tbs-RequestCapabilities-r13      TBS-RequestCapabilities-r13       O
       wlan-RequestCapabilities-r13     WLAN-RequestCapabilities-r13      O
       bt-RequestCapabilities-r13       BT-RequestCapabilities-r13        O
   ]],
   [[  nr-ECID-RequestCapabilities-r16 NR-ECID-RequestCapabilities-r16   O
       nr-Multi-RTT-RequestCapabilities-r16
                                       NR-Multi-RTT-RequestCapabilities-r16
                                                                         O
       nr-DL-AoD-RequestCapabilities-r16
                                       NR-DL-AoD-RequestCapabilities-r16  O
       nr-DL-TDOA-RequestCapabilities-r16
                                       NR-DL-TDOA-RequestCapabilities-r16 O
       nr-UL-RequestCapabilities-r16   NR-UL-RequestCapabilities-r16      O
   ]]
}
```

LPP Provide Capabilities (UE → LMF, 115): LPP Provide Capabilities may be used to transfer UE capability information requested by the UE 500 from the LMF 505. The information included in the LPP Provide Capabilities message may be defined as in Table 2 below. Similar to the LPP Request Capabilities message, common information, which is irrelevant to the positioning scheme, may be included in commonIEsProvideCapabilities. In addition, the information requested according to the positioning scheme may be included in separate IEs.

[Table 2]

```
ProvideCapabilities ::= SEQUENCE {
   criticalExtensions      CHOICE {
       c1                      CHOICE {
           provideCapabilities-r9      ProvideCapabilities-r9-IEs,
           spare3 NULL, spare2 NULL, spare1 NULL
       },
       criticalExtensionsFuture    SEQUENCE {}
   }
}

ProvideCapabilities-r9-IEs ::= SEQUENCE {
   commonIEsProvideCapabilities        CommonIEsProvideCapabilities
   a-gnss-ProvideCapabilities          A-GNSS-ProvideCapabilities
   otdoa-ProvideCapabilities           OTDOA-ProvideCapabilities
   ecid-ProvideCapabilities            ECID-ProvideCapabilities
   epdu-ProvideCapabilities            EPDU-Sequence
   ...,
   [[  sensor-ProvideCapabilities-r13  Sensor-ProvideCapabilities-r13
       tbs-ProvideCapabilities-r13     TBS-ProvideCapabilities-r13
       wlan-ProvideCapabilities-r13    WLAN-ProvideCapabilities-r13
       bt-ProvideCapabilities-r13      BT-ProvideCapabilities-r13
   ]],
   [[  nr-ECID-ProvideCapabilities-r16 NR-ECID-ProvideCapabilities-r16
       nr-Multi-RTT-ProvideCapabilities-r16
                                       NR-Multi-RTT-ProvideCapabilitie
       nr-DL-AoD-ProvideCapabilities-r16
                                       NR-DL-AoD-ProvideCapabilities-r
       nr-DL-TDOA-ProvideCapabilities-r16
                                       NR-DL-TDOA-ProvideCapabilities-
       nr-UL-ProvideCapabilities-r16   NR-UL-ProvideCapabilities-r16
   ]]
}
```

LPP requestAssistanceData (UE → LMF, 117): The LPP requestAssistanceData message may be used for the UE 500 to request information which is necessary or helpful for the UE 500 to perform radio signal measurement for positioning from the LMF 505. Information included in the LPP requestAssistanceData message may be defined as in Table 3 below. The common information, which is irrelevant to the positioning scheme, may be included in commonIEs-RequestAssistanceData. In addition, the information requested according to the positioning scheme may be included in separate IEs.

[Table 3]

```
RequestAssistanceData ::= SEQUENCE {
    criticalExtensions    CHOICE {
        c1              CHOICE {
            requestAssistanceData-r9   RequestAssistanceData-r9-IEs,
            spare3 NULL, spare2 NULL, spare1 NULL
        },
        criticalExtensionsFuture   SEQUENCE {}
    }
}

RequestAssistanceData-r9-IEs ::= SEQUENCE {
    commonIEsRequestAssistanceData    CommonIEsRequestAssistanceData      OPTI
    a-gnss-RequestAssistanceData    A-GNSS-RequestAssistanceData        OPTIONAL,
    otdoa-RequestAssistanceData       OTDOA-RequestAssistanceData
    epdu-RequestAssistanceData       EPDU-Sequence              OPTIONAL,
    ...,
    [[ sensor-RequestAssistanceData-r14
                       Sensor-RequestAssistanceData-r14   OPTIONAL,
        tbs-RequestAssistanceData-r14 TBS-RequestAssistanceData-r14       OPTIONAL,
        wlan-RequestAssistanceData-r14  WLAN-RequestAssistanceData-r14            OPTI
    ]],
    [[ nr-Multi-RTT-RequestAssistanceData-r16  NR-Multi-RTT-RequestAssistanceData-r16
        nr-DL-AoD-RequestAssistanceData-r16      NR-DL-AoD-RequestAssistanceData-r16
        nr-DL-TDOA-RequestAssistanceData-r16 NR-DL-TDOA-RequestAssistanceData-r16 OPTI
    ]]
}
```

LPP ProvideAssistanceData (LMF → UE, 120): The LPP ProvideAssistanceData message may be used for the LMF 505 to provide information which is necessary or helpful for the UE 500 to perform radio signal measurement for positioning. The information included in the LPP ProvideAssistanceData message may be defined as in Table 4 below. Common information, which is irrelevant to the positioning scheme, may be included in commonIEsProvideAssistance-Data. In addition, the information requested according to the positioning scheme may be included in separate IEs.

[Table 4]

```
ProvideAssistanceData ::= SEQUENCE {
    criticalExtensions      CHOICE {
        c1                  CHOICE {
            provideAssistanceData-r9     ProvideAssistanceData-r9-IEs,
            spare3 NULL, spare2 NULL, spare1 NULL
        },
        criticalExtensionsFuture   SEQUENCE {}
    }
}

ProvideAssistanceData-r9-IEs ::= SEQUENCE {
    commonIEsProvideAssistanceData        CommonIEsProvideAssistanceData        OPTIO
    a-gnss-ProvideAssistanceData          A-GNSS-ProvideAssistanceData          OPTIO
    otdoa-ProvideAssistanceData           OTDOA-ProvideAssistanceData           OPTIO
    epdu-Provide-Assistance-Data          EPDU-Sequence                         OPTIO
    ...,
    [[
    sensor-ProvideAssistanceData-r14      Sensor-ProvideAssistanceData-r14      OPTIO
    tbs-ProvideAssistanceData-r14         TBS-ProvideAssistanceData-r14         OPTIO
    wlan-ProvideAssistanceData-r14        WLAN-ProvideAssistanceData-r14        OPTIO
    ]],
    [[  nr-Multi-RTT-ProvideAssistanceData-r16
                            NR-Multi-RTT-ProvideAssistanceData-r16
                                                            OPTIO
        nr-DL-AoD-ProvideAssistanceData-r16
                            NR-DL-AoD-ProvideAssistanceData-r16  OPTIO
        nr-DL-TDOA-ProvideAssistanceData-r16
                            NR-DL-TDOA-ProvideAssistanceData-r16
                                                            OPTIO
    ]]
}
```

LPP Request Location Information (LMF → UE, 125): The LPP Request Location Information message may be used for the LMF 505 to request the UE 500 to provide signal measurement and positioning results necessary for positioning. The LMF 505 may determine a positioning scheme to be used, measurement to be performed by the UE for positioning, a result to respond with and a scheme of responding with the result, etc., then include related information in the LPP Request Location Information message, and transfer the same to the UE 500. The information included in the LPP Request Location Information message may be defined as in Table 5 below.

[Table 5]

```
RequestLocationInformation ::= SEQUENCE {
    criticalExtensions      CHOICE {
        c1                      CHOICE {
            requestLocationInformation-r9   RequestLocationInformation-r9-IEs,
            spare3 NULL, spare2 NULL, spare1 NULL
        },
        criticalExtensionsFuture    SEQUENCE {}
    }
}

RequestLocationInformation-r9-IEs ::= SEQUENCE {
    commonIEsRequestLocationInformation
                                    CommonIEsRequestLocationInformation OPTIC
    a-gnss-RequestLocationInformation   A-GNSS-RequestLocationInformation   OPTIC
    otdoa-RequestLocationInformation    OTDOA-RequestLocationInformation    OPTIC
    ecid-RequestLocationInformation     ECID-RequestLocationInformation     OPTIC
    epdu-RequestLocationInformation     EPDU-Sequence                       OPTIC
    ...,
    [[
    sensor-RequestLocationInformation-r13
                                    Sensor-RequestLocationInformation-r13
                                                                        OPTIC
    tbs-RequestLocationInformation-r13  TBS-RequestLocationInformation-r13  OPTIC
    wlan-RequestLocationInformation-r13 WLAN-RequestLocationInformation-r13 OPTIC
    bt-RequestLocationInformation-r13   BT-RequestLocationInformation-r13   OPTIC
    ]],
    [[  nr-ECID-RequestLocationInformation-r16
                                    NR-ECID-RequestLocationInformation-r16
                                                                        OPTIC
        nr-Multi-RTT-RequestLocationInformation-r16
                                    NR-Multi-RTT-RequestLocationInformation-r
                                                                        OPTIC
        nr-DL-AoD-RequestLocationInformation-r16
                                    NR-DL-AoD-RequestLocationInformation-r16
                                                                        OPTIC
        nr-DL-TDOA-RequestLocationInformation-r16
                                    NR-DL-TDOA-RequestLocationInformation-r1(
                                                                        OPTIC
    ]]
}
```

LPP Provide Location Information (UE → LMF, 130): The LPP Provide Location Information message may be used for the UE 500 to transmit, to the LMF 505, a measurement result and a positioning result requested by the LMF 505. The information included in the LPP Provide Location Information message may be defined as in Table 6 below.

[Table 6]

```
ProvideLocationInformation ::= SEQUENCE {
    criticalExtensions      CHOICE {
        c1                      CHOICE {
            provideLocationInformation-r9    ProvideLocationInformation-r
            spare3 NULL, spare2 NULL, spare1 NULL
        },
        criticalExtensionsFuture    SEQUENCE {}
    }
}

ProvideLocationInformation-r9-IEs ::= SEQUENCE {
    commonIEsProvideLocationInformation
                                    CommonIEsProvideLocationInformat
    a-gnss-ProvideLocationInformation    A-GNSS-ProvideLocationInformatio
    otdoa-ProvideLocationInformation     OTDOA-ProvideLocationInformation
    ecid-ProvideLocationInformation      ECID-ProvideLocationInformation
    epdu-ProvideLocationInformation      EPDU-Sequence
    ...,
    [[
    sensor-ProvideLocationInformation-r13
                                    Sensor-ProvideLocationInformatio

    tbs-ProvideLocationInformation-r13   TBS-ProvideLocationInformation-r
    wlan-ProvideLocationInformation-r13  WLAN-ProvideLocationInformation-
    bt-ProvideLocationInformation-r13    BT-ProvideLocationInformation-r1
    ]],
    [[  nr-ECID-ProvideLocationInformation-r16
                                    NR-ECID-ProvideLocationInformation-r
        nr-Multi-RTT-ProvideLocationInformation-r16
                                    NR-Multi-RTT-ProvideLocationInformat
        nr-DL-AoD-ProvideLocationInformation-r16
                                    NR-DL-AoD-ProvideLocationInformation
        nr-DL-TDOA-ProvideLocationInformation-r16
                                    NR-DL-TDOA-ProvideLocationInformatio
    ]]
}
```

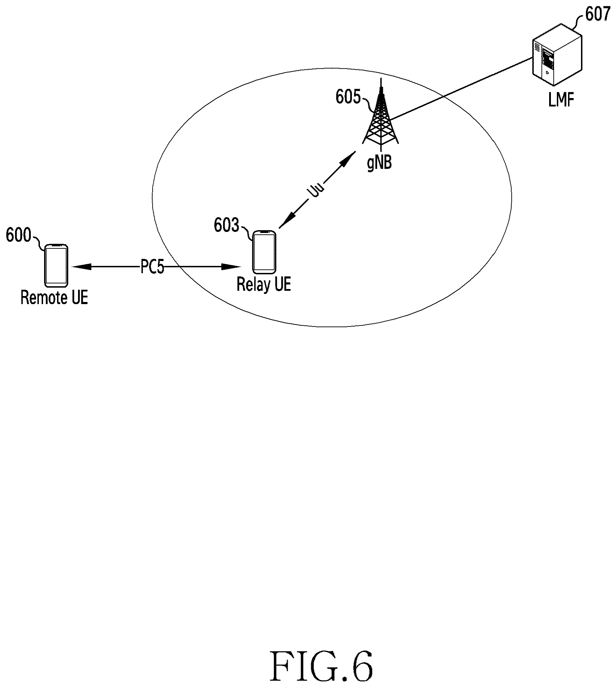

FIG. 6 illustrates a positioning service scenario for an L2 UE-to-network remote UE according to an embodiment of the disclosure.

Referring to FIG. 6, a UE 600 (hereinafter, referred to as a remote UE) operating as an L2 UE-to-network remote UE may be a positioning target UE. In this case, a UE 603 (hereinafter, referred to as a relay UE) connected to the remote UE 600 and operating as an L2 UE-to-network relay UE may exchange data with the remote UE 600 through a sidelink PC5 interface. In addition, the relay UE 603 may exchange data with a gNB 605 through a Uu interface. An LMF 607 and the remote UE 600 may exchange LPP messages as in FIG. 5 for positioning of the remote UE 600. In this case, the relay UE 603 may operate as an L2 UE-to-network relay UE, and may support exchange of LPP messages between the LMF 607 and the remote UE 600. For example, an LPP message that the remote UE 600 sends to the LMF 607 may be transmitted to the relay UE 603 through the PC5 interface. In addition, the relay UE 603 may transfer the LPP message to the LMF 607 through the Uu interface with the gNB 605.

In addition, the relay UE 603 may assist in positioning the remote UE 600 by receiving positioning system information (a positioning system information block (PosSIB)) broadcast by the gNB 605, and then transferring the same to the remote UE 600. In this case, the PosSIB may include at least one of the pieces of information included in LPP Provide Assistance Data 620 of FIG. 5, which is assistance information necessary for positioning. Even if the remote UE 600 is located outside the signal reception range of the gNB 605 and thus fails to receive the PosSIB broadcast by the gNB 605, the remote UE 600 may receive the PosSIB transferred by the relay UE 603, thereby acquiring positioning assistance information necessary for positioning.

In addition, the relay UE 603 may provide the remote Ue 600 with a relationship between a system frame number (SFN) used for time synchronization of a cell operated by the gNB 605 and a direct frame number (DFN) used for time synchronization between the remote UE 600 and the relay UE 603 (for example, as offset information between the SFN and the DFN, the information may include at least one of frame-unit offset, subframe-unit offset, and a slot-unit offset information, hereinafter, referred to as an SFN-DFN offset). In this case, the remote UE 600 may have only DFN-based time synchronization information with respect to the relay UE 603, rather than SFN-based time synchronization information of the cell operated by the gNB 605, since data is transmitted or received through the relay UE 603 rather than the cell operated by the gNB 605. However, since the positioning assistance information required for positioning generated and provided by the LMF 607 is based on the SFN time synchronization information of the cell operated by the gNB 605, the remote UE 600, which has only DFN-based time synchronization information, may have difficulty in properly interpreting the time synchronization information of the information included in the positioning assistance information. Therefore, the relay UE 603 may support the positioning of the remote UE 600 by providing the remote UE 600 with the SFN-DFN offset information.

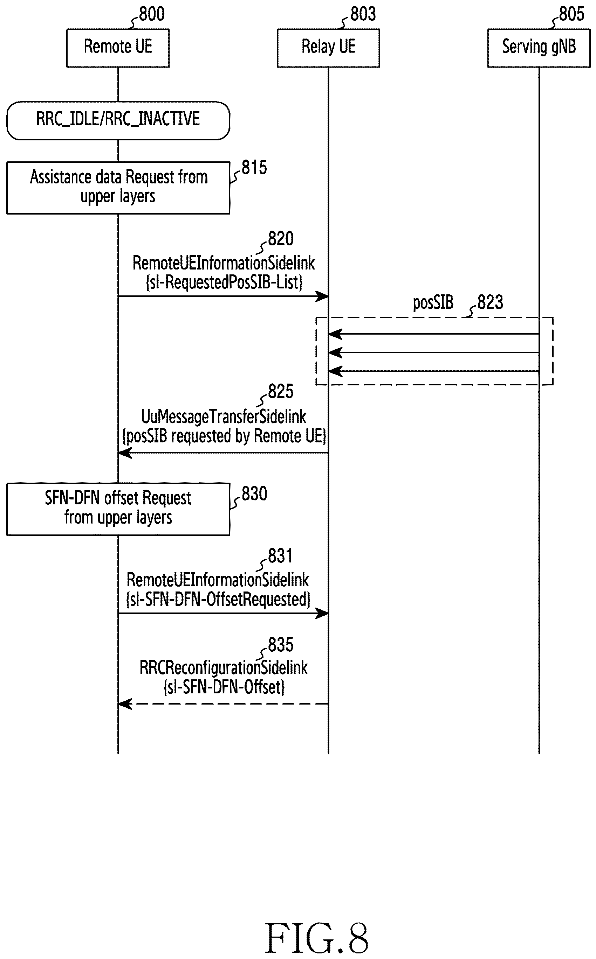

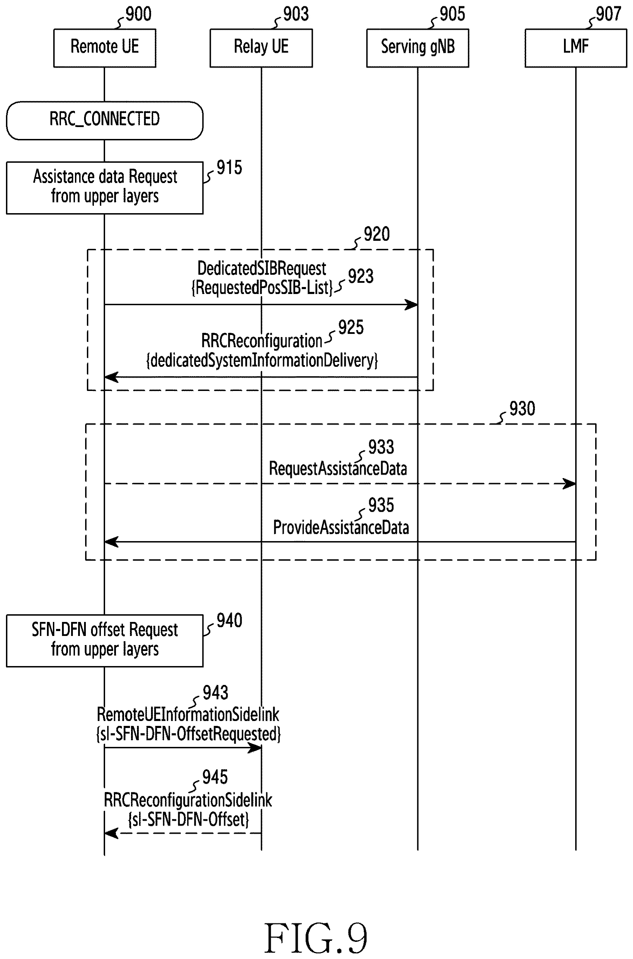

The operations related to the transferring the PosSIB and providing the SFN-DFN offset between the relay UE 603 and the remote UE 600 are described in more detail in embodiments for FIG. 8 and FIG. 9 below.

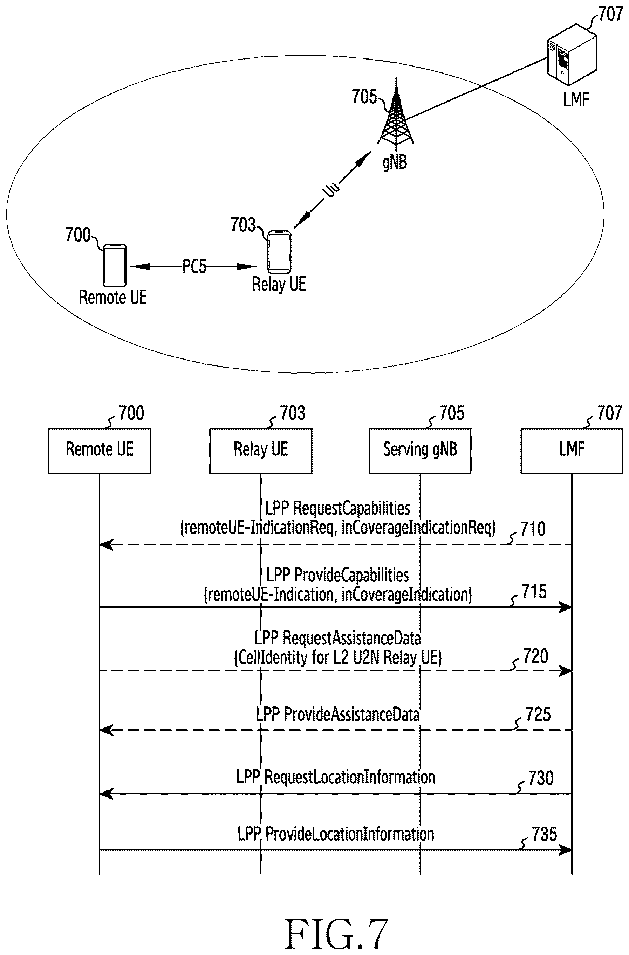

FIG. 7 is a flowchart illustrating a process of exchanging an LPP message for positioning of an L2 UE-to-network remote UE according to an embodiment of the disclosure.

Referring to FIG. 7, a UE 700 operating as an L2 UE-to-network remote UE (hereinafter, referred to as a remote UE) may be a positioning target UE. In this case, a UE 703 (hereinafter, referred to as a relay UE) connected to the remote UE 700 and operating as an L2 UE-to-network relay UE may exchange data with the remote UE 700 through a sidelink PC5 interface. In addition, the relay UE 703 may exchange data with a gNB 705 through a Uu interface. An LMF 707 and the remote UE 700 may exchange LPP messages for positioning of the remote UE 700. Specifically, the above-described LPP message exchange operation may include the following operations. However, the order of LPP message exchange in the following LPP message exchange operation is not fixed and may be changed flexibly according to the situation. In addition, the LPP message exchange operation may include at least one of the following operations, and thus some operations may be omitted.

- - LPP RequestCapabilities 710: The LMF 707 may transmit an LPP RequestCapabilities message to the remote UE 700 for positioning of the remote UE 700, so as to request UE capability information related to positioning. In this case, information included in the LPP RequestCapabilities message may include the information identical or similar to that described in LPP RequestCapabilities 710 in FIG. 5 above.

In addition, the LMF 707 may further request the following two pieces of information necessary for positioning of the remote UE 700 through an LPP RequestCapabilities 710 message.

1. remoteUE-Indication: In a case where a positioning target UE operates as a remote UE 700, there may be a restriction in supporting functions related to a positioning operation. For example, the remote UE 700 does not have a Uu interface with a cell operated by the gNB 705, and thus the remote UE 700 may have difficulty in exchanging a MAC control element (MAC CE) with the gNB 705. Therefore, when the positioning target UE operates as a remote UE 700, positioning operation-related functions requiring MAC CE exchange (e.g., including at least one of a pre-configured measurement gap, a pre-configured PRS processing window, or a semi-persistent/aperiodic SRS) may be difficult to be used for positioning of the positioning target UE. If the positioning target UE operates as a remote UE 700 and is unable to support the positioning operation-related functions, the LMF 707 may not use, for positioning of the positioning target UE, positioning techniques requiring the positioning operation-related functions (e.g., including at least one of DL-TDOA, multi-RTT, or UL-TDOA). Therefore, the LMF 707 may include a specific indicator (e.g., remoteUE-IndicationReq) in the LPP RequestCapabilities message so as to instruct to include, in LPP ProvideCapabilities 715 to be described below, an indicator (e.g., remoteUE-Indication) indicating whether the positioning target UE operates as a remote UE 700, and report the same.

2. inCoverageIndication: In a case where the positioning target UE operates as a remote UE 700, the remote UE 700 may be located outside the coverage of a cell operated by the serving gNB 705 of the relay UE 703 connected to the remote UE 700, as described with reference to FIG. 6 above. Alternatively, when the positioning target UE operates as a remote UE 700, the remote UE 700 may be located inside the coverage of a cell operated by the serving gNB 705 of the connected relay UE 703 as shown in FIG. 7. Generally, when positioning the positioning target UE, the LMF 707 may identify an approximate location of the UE, based on the location of the serving gNB 705 of the positioning target UE, and may control a subsequent positioning process, based on the identified UE location. For example, when a positioning technique in which multiple transmission-reception points (TRPs) perform triangulation by exchanging a downlink signal (e.g., a DL-PRS) or an uplink signal (e.g., a UL-SRS) with a positioning target UE is used, the LMF 707 may select TRPs to be used for positioning, based on the location of the serving gNB 705 of the positioning target UE. If the positioning target UE operates as a remote UE 700, the LMF 707 may identify the approximate location of the remote UE 700, based on the serving gNB 705 position of the relay UE 703 connected to the remote UE 700. However, in a case where the remote UE 700 is located outside the coverage of the cell operated by the serving gNB 705 of the connected relay UE 703, when the LMF 707 identifies an approximate location of the remote UE 700 and selects TRPs to be used for positioning, based on the location of the serving gNB 705 of the relay UE 703 connected to the remote UE 700, this may result in a reduced positioning accuracy or a positioning failure. Therefore, the LMF 707 needs to identify whether the positioning target UE operating as a remote UE 700 is located inside or outside the coverage of a cell operated by the serving gNB 705 of the relay UE 703 to which the positioning target UE is connected. Accordingly, the LMF 707 may include a specific indicator (e.g., inCoverageIndicationReq) in the LPP RequestCapabilities message so as to instruct to include, in the LPP ProvideCapabilities 715 below, an indicator (e.g., inCoverageIndication) indicating whether the positioning target UE is located inside the coverage of the cell operated by the serving gNB 705 of the connected relay UE 703, and report the same.

The remoteUE-IndicationReq and inCoverageIndicationReq indicators to be included in the LPP RequestCapabilities message may be defined as in Table 7 below.

[Table 7]

```
CommonIEsRequestCapabilities ::= SEQUENCE {
    ...,
    [[
    lpp-message-segmentation-req-r14    BIT STRING {    serverToTarget   (0),
                                                        targetToServer   (1) }
    OPTIONAL -- Need ON
    ]],
    [[
    remoteUE-IndicationReq-r18          ENUMERATED { true }
OPTIONAL, -- Need ON
    inCoverageIndicationReq-r18         ENUMERATED { true }
OPTIONAL -- Need ON
    ]]
}
```

| remoteUE-IndicationReq |
| This field, if present, indicates that the target device is requested to indicate if it operates as a L2 U2N Remote UE. |
| inCoverageIndicationReq |
| This field, if present, indicates that the target device operating as a L2 U2N Remote UE is requested to indicate if it is in coverage of the L2 U2N Relay UE's PCell/camping cell. |

In the above-described embodiment, it has been assumed that the remoteUE-IndicationReq indicator and the inCoverageIndicationReq indicator are separately defined, but remoteUE-Indication and inCoverageIndication may be requested together by a single indicator (for example, one of the remoteUE-IndicationReq indicator and the inCoverageIndicationReq indicator).

- LPP ProvideCapabilities 715: After receiving the LPP RequestCapabilities 710 message transmitted by the LMF 707, the positioning target remote UE 700 may include, in the LPP ProvideCapabilities 715 message, the positioning-related UE capability information requested through the LPP RequestCapabilities 710 message, and transmit the same to the LMF 707. In this case, the information included in the LPP ProvideCapabilities 715 message may include information identical to or similar to that described in LPP ProvideCapabilities 715 in FIG. 5 above.

If the remote UE 700 receives a request from the LMF 707 to report remoteUE-Indication and inCoverageIndication through an LPP RequestCapabilities 710 message (i.e., if the LPP RequestCapabilities includes the remoteUE-IndicationReq and inCoverageIndicationReq indicators), the remote UE 700 may include the remoteUE-Indication and inCoverageIndication indicators in the LPP ProvideCapabilities 715 message and transmit the same to the LMF 707 as described below.

1. remoteUE-Indication: When the positioning target UE 700 has been requested from the LMF 707 to report remoteUE-Indication through the LPP RequestCapabilities message 710 (i.e., when the LPP RequestCapabilities includes the remoteUE-IndicationReq indicator), the remoteUE-Indication may be optionally included in the LPP ProvideCapabilities message 715. In case that the positioning target UE 700 is configured and operates as an L2 U2N remote UE, the positioning target UE 700 may configure a value of the remoteUE-Indication indicator as "True" and include the same in the LPP ProvideCapabilities message 715. Conversely, if the positioning target UE 700 is not configured and does not operate as an L2 U2N remote UE, the positioning target UE 700 may not include the remoteUE-Indication indicator in the LPP ProvideCapabilities 715 message. Whenever starting or suspending the operation as an L2 U2N remote UE, the positioning target UE 700 may configure a remoteUE-Indication indicator with an appropriate value and then transmit the LPP ProvideCapabilities 715 message. In this case, even if a new LPP RequestCapabilities 710 message is not received from the LMF 707, the positioning target UE 700 may transmit the ProvideCapabilities 715 message.

2. inCoverageIndication: If the positioning target UE 700 has been requested from the LMF 707 to report inCoverageIndication through the LPP RequestCapabilities 710 message (i.e., if a remoteUE-IndicationReq or inCoverageIndicationReq indicator is included in the LPP RequestCapabilities), inCoverageIndication may be optionally included in the LPP ProvideCapabilities 715 message. Alternatively, when the positioning target UE 700 has received a request to report remoteUE-Indication through the LPP RequestCapabilities message 710 from the LMF 707 and has included remoteUE-Indication in the LPP ProvideCapabilities message 715 (i.e., when the positioning target UE 700 operates as a remote UE), inCoverageIndication may be optionally included in the LPP ProvideCapabilities message 715.

In an embodiment, when the positioning target UE 700 operating as a remote UE is located inside the coverage of a primary cell or a camping cell of the connected relay UE 703, the positioning target UE may configure a value of the inCoverageIndication indicator as "True" and include the same in the LPP ProvideCapabilities message 715.

A remote UE may be determined to be located in the coverage of a specific cell if a cell selection criterion below for the specific cell is satisfied. The cell selection criterion may be satisfied if both Srxlev and Squal calculated according to the following equation are greater than 0.

$$Srxlev = Q_{rxlevmeas} - (Q_{rxlevmin} + Q_{rxlevminoffset}) - P_{compensation} - Qoffset_{temp}$$

$$Squal = Q_{qualmeas} - (Q_{qualmin} + Q_{qualminoffset}) - Qoffset_{temp}$$

Each variable in the above equation may be defined as follows.

- Srxlev: Cell selection RX level value (dB)
- Squal: Cell selection quality value (dB)
- Qoffsettemp: Offset temporarily applied to a cell as specified in TS 38.331 (dB)
- Qrxlevmeas: Measured cell RX level value (RSRP)
- Qqualmeas: Measured cell quality value (RSRQ)
- Qrxlevmin: Minimum required RX level in the cell (dBm). If the UE supports SUL frequency for this cell, Qrxlevmin is obtained from q-RxLevMinSUL, if present, in SIB1, SIB2 and SIB4, additionally, if QrxlevminoffsetcellSUL is present in SIB3 and SIB4 for the concerned cell, this cell specific offset is added to the corresponding Qrxlevmin to achieve the required minimum RX level in the concerned cell;
  else Qrxlevmin is obtained from q-RxLevMin in SIB1, SIB2 and SIB4, additionally, if Qrxlevminoffsetcell is present in SIB3 and SIB4 for the concerned cell, this cell specific offset is added to the corresponding Qrxlevmin to achieve the required minimum RX level in the concerned cell.
- Qqualmin: Minimum required quality level in the cell (dB). Additionally, if Qqualminoffsetcell is signalled for the concerned cell, this cell specific offset is added to achieve the required minimum quality level in the concerned cell.
- Qrxlevminoffset: Offset to the signalled Qrxlevmin taken into account in the Srxlev evaluation as a result of a periodic search for a higher priority PLMN while camped normally in a VPLMN, as specified in TS 23.122.
- Qqualminoffset: Offset to the signalled Qqualmin taken into account in the Squal evaluation as a result of a periodic search for a higher priority PLMN while camped normally in a VPLMN, as specified in TS 23.122.
- Pcompensation: For FR1, if the UE supports the additionalPmax in the NR-NS-PmaxList, if present, in SIB1, SIB2 and SIB4:

    max(PEMAX1 -PPowerClass, 0) - (min(PEMAX2, PPowerClass) - min(PEMAX1, PPowerClass)) (dB);
    else:

    max(PEMAX1 -PPowerClass, 0) (dB)
    For FR2, Pcompensation is set to 0.
    For IAB-MT, Pcompensation is set to 0.

- PEMAX1, PEMAX2: Maximum TX power level of a UE may use when transmitting on the uplink in the cell (dBm) defined as PEMAX in TS 38.101. If UE supports SUL frequency for this cell, PEMAX1 and PEMAX2 are obtained from the p-Max for SUL in SIB1 and NR-NS-PmaxList for SUL respectively in SIB1, SIB2 and SIB4 as specified in TS 38.331, else PEMAX1 and PEMAX2 are obtained from the p-Max and NR-NS-PmaxList respectively in SIB1, SIB2 and SIB4 for normal UL as specified in TS 38.331.
- PPowerClass: Maximum RF output power of the UE (dBm) according to the UE power class as defined in TS 38.101-1.

In an embodiment, if a remote UE is able to receive an SSB transmitted by a specific cell, the remote UE may be determine to be located in the coverage of the specific cell.

In an embodiment, if a remote UE is able to receive an SSB and an SIB transmitted by a specific cell and identify the identity of the specific cell, the remote UE may be determined to be located in the coverage of the specific cell.

When the positioning target UE 700 operating as a remote UE is located outside the coverage of a primary cell or camping cell of the connected relay UE 703, the positioning target UE 700 may not include the inCoverageIndication indicator in the LPP ProvideCapabilities message 715. Whenever the positioning target UE 700 enters or leaves the coverage of the primary cell or camping cell of the connected relay UE 703, the positioning target UE may configure the inCoverageIndication indicator with an appropriate value, and may transmit the LPP ProvideCapabilities message 715 to the LMF 707. In this case, even if the positioning target UE 700 does not receive a new LPP RequestCapabilities 710 message from the LMF 707, the positioning target UE may transmit the ProvideCapabilities message 715 to the LMF 707.

The remoteUE-Indication and inCoverageIndication indicators included in the LPP ProvideCapabilities message may be defined as in Table 8 below.

## [Table 8]

```
CommonIEsProvideCapabilities ::= SEQUENCE {
    ...,
    [[
    segmentationInfo-r14           SegmentationInfo-r14         OPTIONAL,
    -- Cond Segmentation
    lpp-message-segmentation-r14   BIT STRING { serverToTarget (0),
                                               targetToServer  (1) }   OPTIONAL
    ]],
    [[
    remoteUE-Indication-r18     BOOLEAN                          OPTIONAL,
-- Cond NR
    inCoverageIndication-r18    BOOLEAN                          OPTIONAL
    -- Cond Remote
    ]]
}
```

| |
|---|
| **remoteUE-Indication**<br>This field indicates whether the target device in NR access is configured/operating as a L2 U2N Remote UE. The target device in NR access may transmit a *ProvideCapabilities* message with an appropriate value of this field when it starts or stops operation as a U2N Remote UE. |
| **inCoverageIndication**<br>This field indicates whether the target device operating as a L2 U2N Remote UE in NR access is in coverage of the L2 U2N Relay UE's PCell/camping cell. The target device may transmit a *ProvideCapabilities* message with an appropriate value of this field when it enters or leaves the coverage of the L2 U2N Relay UE's PCell/camping cell. |

The configuration and inclusion condition of the remoteUE-Indication and inCoverageIndication indicators may be defined as in Table 9 below.

[Table 9]

| Conditional presence | Explanation |
|---|---|
| NR | This field is optionally present, need OR, for NR access if *remoteUE-IndicationReq* has been received from the location server in this loction session. Otherwise it is not present. |
| Remote | **(option1)**<br>This field is optionally present, need OR, for NR access if *remoteUE-IndicationReq* has been received from the location server in this loction session. Otherwise it is not present.<br>**(option2)**<br>This field is optionally present, need OR, for NR access if *inCoverageIndicationReq* has been received from the location server in this loction session. Otherwise it is not present.<br>**(option3)**<br>This field is optionally present, need OR, if *remoteUE-Indication* is present. Otherwise it is not present. |

- LPP RequestAssistanceData 720: In case that positioning assistance data for signal measurement in connection with position calculation and position estimation is required, the remote UE 700 may request the required information by transmitting an LPP RequestAssistanceData message to the LMF 707. In this case, the information included in the LPP RequestAssistanceData message may include the information identical or similar to that described in LPP RequestAssistanceData 717 in FIG. 5.

In general, the LMF 707 may receive an LPP ProvideCapabilities message from the positioning target UE and may identify positioning-related UE capability information of the positioning target UE. Thereafter, the LMF 707 may select a positioning technique (e.g., at least one of GNSS, DL-TDOA, or multi-RTT) to be used for positioning of the corresponding position target UE. In addition, the LMF may provide the positioning target UE with assistance information necessary to use the selected positioning technique through LPP ProvideAssistanceData 725 below. In this case, the positioning target UE does not need to separately request assistance information necessary for positioning through LPP RequestAssistanceData 720. However, the LMF 707 may not provide assistance information necessary for positioning, and may instruct the positioning target UE to measure positioning-related signals through LPP RequestLocationInformation 730 below. Alternatively, in case that the previously received assistance data is no longer valid, the positioning target UE may request, from the LMF 707 through the LPP RequestAssistanceData 720 message, necessary assistance data to obtain the necessary assistance data.

When the positioning target UE requests positioning-related assistance information from the LMF 707 through LPP RequestAssistanceData, the positioning target UE may also report ID information of its current primary cell together. This may be for the LMF 707 to identify the approximate location of the UE through the primary cell ID of the UE and provide valid positioning assistance information (e.g., DL-PRS configuration information receivable at the location of the UE) at the identified location. However, if the positioning target UE operates as a remote UE 700, the positioning target UE may have difficulty in reporting primary cell information to the LMF because the positioning target UE maintains only a connection with the relay UE 703. Instead, the remote UE 700 may provide the LMF 707 with the ID information of the primary cell or camping cell of the connected relay UE 703 through LPP RequestAssistanceData. In this case, the primary cell ID information included in the LPP RequestAssistanceData may be defined as in Table 10 or Table 11 below. The field description of the primaryCellID field in Table 10 below may be newly defined. In addition, a RelayPrimaryCellID may be newly introduced for the remote UE in Table 11.

[Table 10]

```
CommonIEsRequestAssistanceData ::= SEQUENCE {
    primaryCellID       ECGI         OPTIONAL,    -- Cond EUTRA
    ...,
    [[
        segmentationInfo-r14        SegmentationInfo-r14        OPTIONAL    --
Cond Segmentation
    ]],
    [[
        periodicAssistanceDataReq-r15
                                    PeriodicAssistanceDataControlParameters-r15
                                                                OPTIONAL,    --
Cond PerADreq
        primaryCellID-r15           NCGI-r15                    OPTIONAL    --
Cond NR
    ]]
}
```

| *primaryCellID* |
| This parameter identifies the current primary cell for the target device. **If the target device is operating as a L2 U2N remote UE, this parameter identifies the current primary cell/camping cell for the connected L2 U2N Relay UE.** |

[Table 11]

```
CommonIEsRequestAssistanceData ::= SEQUENCE {
    primaryCellID          ECGI          OPTIONAL,     -- Cond EUTRA
    ...,
    [[
        segmentationInfo-r14        SegmentationInfo-r14          OPTIONAL     --
Cond Segmentation
    ]],
    [[
        periodicAssistanceDataReq-r15
                                    PeriodicAssistanceDataControlParameters-r15
                                              OPTIONAL,     --
Cond PerADreq
        primaryCellID-r15           NCGI-r15              OPTIONAL     --
Cond NR
    ]],
    [[
        RelayPrimaryCellID-r18      NCGI-r15                       OPTIONAL     --
Cond Remote
    ]]
}
```

| primaryCellID | | |
|---|---|---|
| This parameter identifies the current primary cell for the target device. | | |
| **RelayPrimaryCellID** | | |
| This parameter identifies the current primary cell/camping cell of L2 U2N relay UE connected to the target device. | | |
| **Conditional presence** | **Explanation** | |
| **NR** | The field is mandatory present for NR access **except L2 U2N relay case. The field is absent if the target device is acting as L2 U2N remote UE.** The field shall be omitted for non-NR user plane support. | |
| **Remote** | **The field is mandatory present if the target device is acting as L2 U2N remote UE. The field shall be omitted for non-NR user plane support.** | |

For reference, in the embodiment of Table 11, only a case in which an NR cell global identifier (NCGI) is used as a primary/camping cell ID of the relay UE 703 connected to the remote UE 700 is described for the sake of descriptive convenience, but at least one combination of SL-AccessInfo-L2U2N IE, CellAccessRelatedInfo IE, and SL-ServingCellInfo IE defined in TS 38.331 specification as in Table 12 below may be used instead of the NCGI.

[Table 12]

```
SL-AccessInfo-L2U2N-r17 ::=            SEQUENCE {
    cellAccessRelatedInfo-r17              CellAccessRelatedInfo,
    sl-ServingCellInfo-r17                 SL-ServingCellInfo-r17,
    ...
}
CellAccessRelatedInfo    ::=           SEQUENCE {
    plmn-IdentityInfoList                  PLMN-IdentityInfoList,
    cellReservedForOtherUse                ENUMERATED {true}            OPTIONAL,
-- Need R
    ...,
    [[
    cellReservedForFutureUse-r16           ENUMERATED {true}            OPTIONAL,
-- Need R
    npn-IdentityInfoList-r16               NPN-IdentityInfoList-r16     OPTIONAL
-- Need R
    ]],
    [[
    snpn-AccessInfoList-r17                SEQUENCE (SIZE (1..maxNPN-r16)) OF SNPN-
AccessInfo-r17    OPTIONAL      -- Need R
    ]]
}
SL-ServingCellInfo-r17 ::=      SEQUENCE {
    sl-PhysCellId-r17                 PhysCellId,
    sl-CarrierFreqNR-r17              ARFCN-ValueNR
}
```

- LPP ProvideAssistanceData 725: After receiving the LPP RequestAssistanceData 720 message transmitted by the positioning target remote UE 700, the LMF 707 may include the positioning-related assistance information requested through the LPP RequestAssistanceData 720 message in the LPP ProvideAssistanceData 725 message and transmit the same to the remote UE 700. Alternatively, the LMF 707 may select a positioning technique to be used for positioning of the positioning target UE without a separate request from the positioning target UE. In addition, the LMF 707 may provide the positioning target UE with assistance information necessary to use the selected positioning technique through the LPP ProvideAssistanceData 725. The information included in the LPP ProvideAssistanceData message may include the information identical or similar to that described in the LPP ProvideAssistanceData 720 in FIG. 5.

- LPP RequestLocationInformation 730: For positioning of the positioning target remote UE 700, the LMF 707 may transmit an LPP RequestLocationInformation message to the remote UE so as to request a positioning result report or a positioning-related signal measurement result report. In this case, the information included in the LPP RequestLocationInformation message may include information identical to or similar to that described the LPP RequestLocationInformation 725 in FIG. 5.

- LPP ProvideLocationInformation 735: After receiving the LPP RequestLocationInformation 730 message transmitted by the LMF 707, the positioning target remote UE 700 may include the positioning result or the positioning-related signal measurement result requested through the corresponding message in the LPP ProvideLocationInformation 735 message and then transmit the same to the LMF. In this case, the information included in the LPP ProvideLocationInformation message may include the information identical or similar to that described in LPP ProvideLocationInformation 730 in FIG. 5 above.

FIG. 8 is a flowchart illustrating a process in which an L2 UE-to-network remote UE receives assistance information required for positioning in an RRC_IDLE/RRC_INACTIVE state according to an embodiment of the disclosure.

Referring to FIG. 8, a positioning target UE 800 that operates as a remote UE may request forwarding of positioning system information (hereinafter, referred to as a PosSIB) broadcast by a base station 805 from a relay UE 803 in order to perform a positioning operation in an RRC_IDLE or RRC_INACTIVE state. In addition, in case that positioning assistance information included in the PosSIB includes information generated based on SFN time synchronization information of a cell operated by the gNB 805, the remote UE 800 having only DFN-based time synchronization information may request SFN-DFN offset information from the relay UE 803 in order to obtain SFN-based time synchronization. A specific process in which the remote UE 800 requests and receives the PosSIB and SFN-DFN offset information from the relay UE 803 may be described as described below.

- Assistance data request from upper layers (operation 815): An RRC layer of the positioning target UE 800 operating as a remote UE may receive a request for acquiring the PosSIB for positioning from an upper layer (e.g., an LTE Positioning Protocol (LPP) layer or application layer, which is a layer upper than the RRC layer) in the RRC_IDLE or RRC_INACTIVE state. The type of PosSIB (for example, PosSIB type) that the positioning target UE requires may vary depending on the positioning method to be used (for example, at least one of GNSS, OTDOA, or DL-TDOA/DL-AoD). Therefore, the upper layer (e.g., the LPP layer or the application layer) of the positioning target UE may request the RRC layer to acquire the PosSIB, and also forward information about the type of the PosSIB (e.g., the PosSIB type) corresponding to the positioning method to be used.

- RemoteUEInformationSidelink (operation 820): When the positioning target UE 800 operating as a remote UE receives a request from the upper layer to acquire specific PosSIB types in operation 815 and the following conditions are satisfied, the remote UE 800 may include, in a RemoteUEInformationSidelink message, a list (e.g., sl-RequestedPosSIB-List) of PosSIBs to be acquired, and transmit the same to the connected relay UE 803. The positioning target UE 800 may request forwarding of the PosSIB by transmitting a list of the PosSIBs to the relay UE 803.

  Condition 1: Not having PosSIB information of a valid version for at least one PosSIB type required for the positioning operation

  Condition 2: At least one PosSIB type necessary for the positioning operation has not been included in the RemoteUEInformationSidelink message transmitted to the relay UE 803 and has not been indicated.

  Condition 3: The PosSIB-ForwardingSupported value has been configured to be true in the UECapabilityInformationSidelink message previously transmitted by the relay UE 803.

On the other hand, if the remote UE 800 no longer needs to acquire PosSIBs, the sl-RequestedPosSIB-List value inside the RemoteUEInformationSidelink message may be configured as "release". In addition, the remote UE may cancel a PosSIB forwarding request by transmitting the RemoteUEInformationSidelink message including sl-RequestedPosSIB-List configured as "release" to the relay UE 803.

- PosSIB acquisition (operation 823): In case that the relay UE 803 has received the RemoteUEinformationSidelink message 820 including the sl-RequestedPosSIB-List from the remote UE 800 and does not have a valid version of the requested PosSIBs, the relay UE 803 may receive the PosSIB from the base station 805. However, if the relay UE 803 has a valid version of the PosSIBs requested by the remote UE 800 through the sl-RequestedPosSIB-List, this operation may be omitted.
- UuMessageTransferSidelink (operation 825): The relay UE 803 may forward the PosSIBs requested through the RemoteUEInformationSidelink 820 message to the remote UE 800 through a UuMessageTransferSidelink message. In this case, the PosSIBs forwarded to the remote UE 800 may be included in an sl-SystemInformationDelivery field in the UuMessageTransferSidelink message.
- SFN-DFN offset Request from upper layers (operation 830): In case that the PosSIB information secured (or to be secured) for positioning includes SFN-based time synchronization information, the remote UE 800 may require SFN-DFN offset information in order to obtain SFN-based time synchronization. More specifically, the RRC layer of the remote UE 800 may receive a request, as needed, from an upper layer (e.g., LPP or application layer) to acquire SFN-DFN offset information.
- RemoteUEInformationSidelink (operation 831): The RRC layer of the remote UE 800 may request SFN-DFN offset information from the relay UE 803 by configuring the sl-SFN-DFN-OffsetRequested indicator value inside the RemoteUEinformationSidelink message transmitted to the relay UE 803 as true.

The sl-SFN-DFN-OffsetRequested indicator inside the RemoteUEInformationSidelink message may be defined as in Table 13 below.

[Table 13]

```
RemoteUEInformationSidelink-v18xy-IEs ::=      SEQUENCE {
    sl-RequestedPosSIB-List-r18                SetupRelease { SL-RequestedPosSIB-
List-r18 }      OPTIONAL,    -- Need M
    sl-SFN-DFN-OffsetRequested-r18      ENUMERATED { true }   OPTIONAL,    -- Need R
    nonCriticalExtension               SEQUENCE {}           OPTIONAL
}
```

If the data type of sl-SFN-DFN-offsetRequested is defined as "ENUMERATED {true}" and the need code is defined as "R" as in Table 13, the relay UE 803 may release the previously stored configuration if the RemoteUEinformationSidelink message transmitted by the remote UE 800 does not include the sl-SFN-DFN-offsetRequested indicator. In addition, the relay UE 803 may no longer provide the SFN-DFN offset information. Therefore, whenever the remoteUEinformationSidelink message is transmitted to the relay UE 803, the RRC layer of the remote UE 800 may determine whether the SFN-DFN offset information is required, based on the upper layer request. In this case, if SFN-DFN offset information is necessary and the sfn-DFN-OffsetSupported value in the UECapabilityInformationSidelink previously transmitted by the relay UE 803 is configured as true, the remote UE 800 may include the sl-SFN-DFN-offsetRequested indicator in the RemoteUEinformationSidelink message. In addition, the remote UE 800 may set the sl-SFN-DFN-offsetRequested indicator value to true. However, in case that the remote UE 800 no longer requires the SFN-DFN offset information, the remoteUEinformationSidelink message may not include the sl-SFN-DFN-offsetRequested indicator. In addition, the remote UE 800 may release the existing configuration by transmitting the same to the relay UE 803. An operation in which the remote UE 800 configures the sl-SFN-DFN-offsetRequested indicator may be identical or similar to that described in the specification as in Table 14 below.

[Table 14]

| |
|---|
| 5.8.9.8.1 General<br>This procedure is used by the L2 U2N Remote UE in RRC_IDLE/RRC_INACTIVE to inform about the required SIB(s)/posSIB(s), provide Paging related information to the connected L2 U2N Relay UE, and request the SFN-DFN offset from the connected L2 U2N Relay UE. |
| 5.8.9.8.2 Actions related to transmission of *RemoteUEInformationSidelink* message<br>When entering RRC _IDLE or RRC_INACTIVE, or upon change in any of the information in the *RemoteUEInformationSidelink* while in RRC_IDLE or RRC_INACTIVE, the L2 U2N Remote UE shall:<br>   1> if the UE has not stored a valid version of a SIB, in accordance with clause 5.2.2.2.1, of one or several required SIB(s) in accordance with clause 5.2.2.1 and the requested SIB has not been indicated in *RemoteUEInformationSidelink* message to the L2 U2N Relay UE before:<br>      2> include *sl-RequestedSIB-List* in the *RemoteUEInformationSidelink* to indicate the requested SIB(s); |

(continued)

| |
|---|
| 5.8.9.8.2 Actions related to transmission of *RemoteUEInformationSidelink* message |
|    1> if the UE has not stored a valid version, in accordance with clause 5.2.2.2.1, of one or several posSIB(s) that the UE requires for a positioning operation, and the requested posSIB has not been indicated in *RemoteUEInformationSidelink* message to the L2 U2N Relay UE before, and the connected L2 U2N relay UE set *posSIB-ForwardingSupported* to true: |
|       2> include *sl-RequestedPosSIB-List* in the *RemoteUEInformationSidelink* to indicate the requested pos-SIB(s); |
|    **1> if the UE needs SFN-DFN offset based on the request from upper layers and the connected L2 U2N relay UE set *sfn-DFN-OffsetSupported* to true:** |
|       **2> set *sl-SFN-DFN-OffsetRequested* to *true*;** |
| <<Unrelated part is omitted>> |
|    1> submit the *RemoteUEInformationSidelink* message to lower layers for transmission; |

Alternatively, the sl-SFN-DFN-OffsetRequested indicator inside the RemoteUEInformationSidelink message may be defined as in Table 15 below.

[Table 15]

```
RemoteUEInformationSidelink-v18xy-IEs ::=      SEQUENCE {
    sl-RequestedPosSIB-List-r18                SetupRelease { SL-RequestedPosSIB-
List-r18 }      OPTIONAL,     -- Need M
    sl-SFN-DFN-OffsetRequested-r18             SetupRelease { SL-SFN-DFN-
OffsetRequested-r18 }      OPTIONAL,     -- Need M
    nonCriticalExtension                       SEQUENCE
{}                                             OPTIONAL
}
SL-SFN-DFN-OffsetRequested-r18-IEs ::= ENUMERATED { true }
```

In case that the data type of sl-SFN-DFN-offsetRequested is defined as SetupRelease and the need code is "M" as in Table 15, when the sl-SFN-DFN-offsetRequested indicator is not included in the RemoteUEinformationSidelink message transmitted by the remote UE 800, the relay UE 803 may maintain the previously stored configuration. For example, in case that the RemoteUEinformationSidelink message previously transmitted by the remote UE 800 to the relay UE 803 includes the sl-SFN-DFN-OffsetRequested indicator and the value of the sl-SFN-DFN-OffsetRequested indicator is configured as "true", even when the sl-SFN-DFN-OffsetRequested indicator is not included in the RemoteUEinformationSidelink message transmitted by the remote UE 800 to the relay UE 803, the relay UE 803 may maintain the previously configured value. In addition, the relay UE 803 may continue to provide the SFN-DFN offset information to the remote UE 800. Whenever transmitting the RemoteUEinformationSidelink message to the relay UE 803, the RRC layer of the remote UE 800 may determine whether SFN-DFN offset information is required, based on an upper layer request. In this case, if the remote UE 800 requires SFN-DFN offset information and the remote UE 800 has not previously configured the sl-SFN-DFN-OffsetRequested indicator in the RemoteUEinformationSidelink transmitted to the relay UE 803 by the remote UE 800 as true and the sfn-DFN-OffsetSupported value is configured as true in the UECapabilityInformationSidelink previously transmitted by the relay UE 803, the remote UE 800 may include the sl-SFN-DFN-offsetRequested indicator in the RemoteUEinformationSidelink message. In addition, the remote UE 800 may configure the sl-SFN-DFN-offsetRequested indicator value as true. If the remote UE 800 no longer needs SFN-DFN offset information, the value of the sl-SFN-DFN-offsetRequested indicator in the RemoteUEinformationSidelink message may be configured as "release". In addition, the remote UE 800 may release the existing configuration by transmitting the RemoteUEinformationSidelink message including the sl-SFN-DFN-offsetRequested indicator configured as "release" to the relay UE 803. The operation in which the remote UE 800 configures the sl-SFN-DFN-offsetRequested indicator may be identical or similar to that described in the specification as in Table 16 below.

[Table 16]

| |
|---|
| 5.8.9.8.1 General |
| This procedure is used by the L2 U2N Remote UE m RRC IDLE/RRC INACTIVE to inform about the required SIB(s)/posSIB(s) provide Paging related information to the connected L2 U2N Relay UE, and request the SFN-DFN offset from the connected L2 U2N Relay UE. |

(continued)

| |
| --- |
| 5.8.9.8.2 Actions related to transmission of *RemoteUEInformationSidelink* message<br>When entering RRC_IDLE or RRC_INACTIVE, or upon change in any of the information in the *RemoteUEInformationSidelink* while in RRC_IDLE or RRC_INACTIVE, the L2 U2N Remote UE shall: |
| <<Unrelated part is omitted>><br>   **1> if the UE needs SFN-DFN offset based on the request from upper layers**<br>      **2> if the *sl-SFN-DFN-OffsetRequested* has not been set in *RemoteUEInformationSidelink* message to the connected L2 U2N relay UE before, and if the connected L2 U2N relay UE set *sfn-DFN-Offset-Supported* to true:**<br>         **3> include *sl-SFN-DFN-OffsetRequested* in *RemoteUEInformationSidelink* to request SFN-DFN offset.**<br>   **1> else:**<br>      **2> set the *sl-SFN-DFN-OffsetRequested* to the value *release* if requested before;** |
| <<Unrelated part is omitted>><br>   1> submit the *RemoteUEInformationSidelink* message to lower layers for transmission; |

In an embodiment, according to an implementation of the remote UE 800, the RemoteUEInformationSidelink message 831 for requesting SFN-DFN offset information may be combined with the RemoteUEInformationSidelink message 820 for requesting PosSIB forwarding. For example, the sl-RequestedPosSIB-List field and the sl-SFN-DFN-OffsetRequested indicator may be simultaneously included and configured in the same RemoteUEInformationSidelink message.

- RRCReconfigurationSidelink (operation 835): The relay UE 803 having received a request for the SFN-DFN offset information from the remote UE 800 through the RemoteUEInformationSidelink message 831 may provide the remote UE 800 with the SFN-DFN offset information through the RRCReconfigurationSidelink message. The SFN-DFN offset information in RemoteUEInformationSidelink may be defined as in Table 17 below.

[Table 17]

```
RRCReconfigurationSidelink-v18xy-IEs ::= SEQUENCE {
    sl-SFN-DFN-Offset-r18                    SL-SFN-DFN-Offset-r18
OPTIONAL, -- Need N
    nonCriticalExtension                     SEQUENCE {}
OPTIONAL
}
```

The operation in which the relay UE 803 provides the remote UE 800 with the SFN-DFN offset information through RRCReconfigurationSidelink upon the request from the remote UE 800 in operation 831 may be identical as or similar to that described in Table 18 below.

[Table 18]

| |
| --- |
|    1> if the UE is operating as a L2 U2N Relay UE:<br>      2> if the destination UE requested the SFN-DFN offset in a previous *RemoteUEInformationSidelink* message:<br>         3> if the SFN-DFN offset has changed since a previous transmission of the *RRCReconfigurationSidelink* message, or no previous transmission of the *RRCReconfigurationSidelink* message has occurred since the reception of the *RemoteUEInformationSidelink* message:<br>            4> set the *sl-SFN-DFN-Offset* according to the relation between the SFN timeline of the PCell and the DFN timeline; |

FIG. 9 is a flowchart illustrating a process in which an L2 UE-to-network remote UE receives assistance information necessary for positioning in an RRC_CONNECTED state according to an embodiment of the disclosure.
Referring to FIG. 9, a positioning target UE 900 operating as a remote UE may request positioning-related assistance information from a base station 905 or an LMF 907 in order to perform a positioning operation in an RRC_CONNECTED state. In operation 823, when the base station (e.g., the serving gNB 905, hereinafter, referred to as a base station) provides positioning system information (hereinafter, referred to as a PosSIB), the remote UE 900 may request a necessary PosSIB from the base station 905 in the RRC_CONNECTED state.

Alternatively, in operation 833, when maintaining an LPP session with the LMF 907, the remote UE 900 may request, through an LPP message, the necessary positioning assistance information from the LMF 907. In addition, when the positioning assistance information included in the PosSIB 925 received from the base station 905 or an LPP message 935 received from the LMF 907 includes information generated based on SFN time synchronization information of the cell operated by the base station 905, the remote UE 900 having only DFN-based time synchronization information may request SFN-DFN offset information from the relay UE 903 to obtain the SFN-based time synchronization. A specific process in which the remote UE 900 obtains the positioning assistance information and the SFN-DFN offset information is described below.

- Assistance data request from upper layers (operation 915): An RRC layer of the positioning target UE 900 operating as a remote UE 900 may receive a request for obtaining a PosSIB for positioning from an upper layer (for example, an LPP layer or an application layer upper than the RRC layer) in an RRC_CONNECTED state. Depending on a positioning scheme to be used (e.g., at least one of GNSS, OTDOA, or DL-TDOA/DL-AoD), the type of PosSIB (e.g., PosSIB type) required by the positioning target UE may vary. Therefore, the upper layer (e.g., the LPP layer or application layer) of the positioning target UE may request the RRC layer to obtain a PosSIB, and may also forward the type of PosSIB (e.g., PosSIB type) corresponding to the positioning scheme to be used. In this case, the remote UE 900 may obtain the PosSIB as in Case 1 (operation 920) below.

Alternatively, the LPP layer of the positioning target UE 900 operating as a remote UE may receive a request for acquiring positioning-related assistance information for positioning from an upper layer (e.g., the application layer upper than the LPP layer) in the RRC_CONNECTED state. The type of positioning assistance information required by the positioning target UE may vary according to a positioning scheme to be used (for example, at least one of GNSS, OTDOA, or DL-TDOA/DL-AoD). Therefore, the upper layer (e.g., the application layer) of the positioning target UE may request the LPP layer to obtain positioning assistance information, and may also forward the positioning scheme to be used. In this case, the remote UE 900 may obtain the positioning assistance information as in Case 2 (operation 930) below.

Case 1: When remote UE 900 requests PosSIB from base station 905 at RRC layer (operation 920)

- DedicatedSIBRequest(operation 923): In a case where the positioning target UE 900 operating as a remote UE receives a request to obtain specific PosSIB types from the upper layer in operation 915, when at least one of the requested PosSIB is included in posSI-SchedulingInfo in previously stored SIB1 (for example, the remote UE 900 may receive SIB1 forwarded through the relay UE 903), the remote 900 may request a necessary PosSIB from the base station 905 through a DedicatedSIBRequest message. In this case, the remote UE 900 may request specific PosSIB types from the base station 905 by including the necessary PosSIB type information in the RequestedPosSIB-List in the DedicatedSIBRequest message.
- RRCReconfiguration (operation 925): The base station 905 may provide the PosSIBs requested through the DedicatedSIBRequest message 923 to the remote UE 900 through an RRCReconfiguration message. In this case, the PosSIBs provided to the remote UE 900 may be included in a dedicatedSystemInformationDelivery field in the RRCReconfiguration message.

Case 2: When LPP layer of remote UE 900 requests positioning assistance information from LMF 907 (operation 930)

- LPP RequestAssistanceData (operation 933): When the positioning target UE 900 operating as a remote UE has been requested, in operation 915, to obtain, from the upper layer, positioning assistance information necessary for using a specific positioning scheme, the remote UE 900 may request the necessary information by transmitting an LPP RequestAssistanceData message to the LMF 907. In this case, the information included in the LPP RequestAssistanceData message may include information identical or similar to that described in LPP RequestAssistanceData 917 in FIG. 5.
- LPP ProvideAssistanceData (operation 935): The LMF 907 may receive an LPP RequestAssistanceData message 933 transmitted by the positioning target remote UE 900. In addition, the LMF 907 may include the positioning-related assistance information requested through the LPP RequestAssistanceData 933 message in the LPP ProvideAssistanceData 935 message and transmit the same to the LMF 907. Alternatively, the LMF 907 may select a positioning scheme to be used for positioning of the positioning target UE without a separate request from the positioning target UE. In addition, the LMF 907 may provide assistance information necessary for using the selected positioning technique to the target UE for positioning through LPP ProvideAssistanceData 935. The information included in the LPP ProvideAssistanceData message may include information identical or similar to that described in LPP ProvideAssistanceData 920 in FIG. 5.

- SFN-DFN offset Request from upper layers (operation 940): When the PosSIB and positioning assistance information secured (or to be secured) for positioning include SFN-based time synchronization information, the remote UE 900 may need SFN-DFN offset information in order to obtain SFN-based time synchronization. More specifically, the RRC layer of the remote UE 900 may request the upper layer (e.g., the LPP or application layer) to obtain the SFN-DFN offset information as needed.
- RemoteUEInformationSidelink (operation 943): The RRC layer of the remote UE 900 may request the SFN-DFN offset information from the relay UE 903 by configuring a value of the sl-SFN-DFN-OffsetRequested indicator in the RemoteUEinformationSidelink message transmitted to the relay UE 903 to be true even in the RRC_CONNECTED state.

The sl-SFN-DFN-OffsetRequested indicator in the RemoteUEInformationSidelink message may be defined as in Table 19 below.

[Table 19]

```
RemoteUEInformationSidelink-v18xy-IEs ::=      SEQUENCE {
    sl-RequestedPosSIB-List-r18               SetupRelease { SL-RequestedPosSIB-
List-r18 }      OPTIONAL,    -- Need M
    sl-SFN-DFN-OffsetRequested-r18    ENUMERATED { true }  OPTIONAL,    -- Need R
    nonCriticalExtension               SEQUENCE {}          OPTIONAL
}
```

In a case where the data type of sl-SFN-DFN-offsetRequested is defined as "ENUMERATED {true}" and the need code is defined as "R" as in Table 19, if the sl-SFN-DFN-OffsetRequested indicator is not included in the RemoteUEinformationSidelink message transmitted by the remote UE 900, the relay UE 903 may release the previously stored configuration. In addition, the relay UE 903 may no longer provide SFN-DFN offset information. Therefore, whenever transmitting the RemoteUEinformationSidelink message to the relay UE 903, the RRC layer of the remote UE 900 may determine, based on an upper layer request, whether SFN-DFN offset information is required. In this case, when the SFN-DFN offset information is needed and the relay UE 903 has configured the sfn-DFN-OffsetSupported value to be true in the previously transmitted UECapabilityInformationSidelink, the remote UE 900 may include the sl-SFN-DFN-offsetRequested indicator in the RemoteUEinformationSidelink message. The remote UE 900 may set the sl-SFN-DFN-offsetRequested indicator value in the RemoteUEinformationSidelink message to true. However, when the remote UE 900 no longer requires SFN-DFN offset information, the remote UE 900 may release the existing configuration by transmitting the RemoteUEinformationSidelink message to the Relay UE 903 without including the sl-SFN-DFN-offsetRequested indicator in the RemoteUEinformationSidelink message. The operation in which the remote UE 900 configures the sl-SFN-DFN-offsetRequested indicator in the RRC _CONNECTED state may be identical or similar to that described in the specification as in Table 20 below.

[Table 20]

| |
|---|
| 5.8.9.8.1 General<br>This procedure is used by the L2 U2N Remote UE in RRC_IDLE/RRC_INACTIVE to inform about the required SIB(s)/posSIB(s), provide Paging related information to the connected L2 U2N Relay UE, and request the SFN-DFN offset from the connected L2 U2N Relay UE. |
| **This procedure is used by the L2 U2N Remote UE in RRC CONNECTED to request the SFN-DFN offset from the connected L2 U2N Relay UE.**<br>5.8.9.8.2 Actions related to transmission of *RemoteUEInformationSidelink* message<br>When entering RRC_IDLE or RRC_INACTIVE, or upon change in any of the information in the *RemoteUEInformationSidelink* while in RRC_IDLE or RRC _INACTIVE, the L2 U2N Remote UE shall:<br>    1> if the UE has not stored a valid version of a SIB, in accordance with clause 5.2.2.2.1, of one or several required SIB(s) in accordance with clause 5.2.2.1 and the requested SIB has not been indicated in *RemoteUEInformationSidelink* message to the L2 U2N Relay UE before:<br>        2> include *sl-RequestedSIB-List* in the *RemoteUEInformationSidelink* to indicate the requested SIB(s); |

(continued)

| |
|---|
| **This procedure is used by the L2 U2N Remote UE in RRC CONNECTED to request the SFN-DFN offset from the connected L2 U2N Relay UE.** |
| 5.8.9.8.2 Actions related to transmission of *RemoteUEInformationSidelink* message |
|     1> if the UE has not stored a valid version, in accordance with clause 5.2.2.2.1, of one or several posSIB(s) that the UE requires for a positioning operation, and the requested posSIB has not been indicated in *RemoteUEInformationSidelink* message to the L2 U2N Relay UE before, and the connected L2 U2N relay UE set *posSIB-ForwardingSupported* to true: |
|         2> include *sl-RequestedPosSIB-List* in the *RemoteUEInformationSidelink* to indicate the requested posSIB(s); |
|     1> if the UE needs SFN-DFN offset based on the request from upper layers and the connected L2 U2N relay UE set *sfn-DFN-OffsetSupported* to true: |
|         2> set *sl-SFN-DFN-OffsetRequested* to *true*; |
| <<Unrelated part is omitted>><br>    1> submit the *RemoteUEInformationSidelink* message to lower layers for transmission; |
| <<Unrelated part is omitted>><br>**Upon any change in the need of SFN-DFN offset while in RRC CONNECTED, the L2 U2N Remote UE shall:**<br>    **1> if the UE needs SFN-DFN offset based on the request from upper layers and the connected L2 U2N relay UE set *sfn-DFN-OffsetSupported* to true:**<br>        **2> set *sl-SFN-DFN-OffsetRequested* to *true*;**<br>    **1> submit the *RemoteUEInformationSidelink* message to lower layers for transmission:** |

Alternatively, the sl-SFN-DFN-OffsetRequested indicator in the RemoteUEInformationSidelink message may be defined as in Table 21 below.

[Table 21]

```
RemoteUEInformationSidelink-v18xy-IEs ::=      SEQUENCE {
    sl-RequestedPosSIB-List-r18               SetupRelease { SL-RequestedPosSIB-
List-r18 }      OPTIONAL,    -- Need M
    sl-SFN-DFN-OffsetRequested-r18            SetupRelease { SL-SFN-DFN-
OffsetRequested-r18 }      OPTIONAL,    -- Need M
    nonCriticalExtension                      SEQUENCE
{}                                        OPTIONAL
}
SL-SFN-DFN-OffsetRequested-r18-IEs ::= ENUMERATED { true }
```

In a case where the data type of sl-SFN-DFN-offsetRequested is defined as SetupRelease and the need code is defined as "M" as in Table 21, when the sl-SFN-DFN-offsetRequested indicator is not included in the RemoteUEinformationSidelink message transmitted by the remote UE 900, the relay UE 903 may maintain the previously stored configuration. For example, in case that the sl-SFN-DFN-OffsetRequested indicator is included in the RemoteUEinformationSidelink message previously transmitted by the remote UE 900 to the relay UE 903, and the sl-SFN-DFN-OffsetRequested indicator value is configured as true, even if the sl-SFN-DFN-OffsetRequested indicator is not included in the RemoteUEinformationSidelink message transmitted to the relay UE 903 by the remote UE 900, the relay UE 903 may maintain the existing configuration value. In addition, the relay UE 903 may provide SFN-DFN offset information to the remote UE 900. Whenever transmitting the RemoteUEinformationSidelink message to the relay UE 903, the RRC layer of the remote UE 900 may determine, based on an upper layer request, whether the SFN-DFN offset information is required. In this case, in a case where the remote UE 900 requires SFN-DFN offset information, when the sl-SFN-DFN-OffsetRequested indicator in the RemoteUEinformationSidelink message previously transmitted to the relay UE 903 by the remote UE 900 has not been configured to be true and the relay UE 903 has configured the sfn-DFN-OffsetSupported value in the previously transmitted UECapabilityInformationSidelink as true, the remote UE 900 may include the sl-SFN-DFN-offsetRequested indicator in the RemoteUEinformationSidelink message. In addition, the remote UE 900 may configure the sl-SFN-DFN-offsetRequested indicator value in the RemoteUEinformationSidelink message as true. However, if the remote UE 900 no longer needs SFN-DFN offset information, the value of the sl-SFN-DFN-offsetRequested indicator in the remoteUEinformationSidelink message may be configured to as "release". In addition, the remote UE 900 may release the existing configuration by transmitting the same to the relay UE 903. The operation in which the remote UE 900 configures the sl-SFN-DFN-offsetRequested indicator in the RRC_CONNECTED state may be identical or similar to that described in the specification as in Table 22 below.

[Table 22]

| |
|---|
| 5.8.9.8.1 General<br>This procedure is used by the L2 U2N Remote UE in RRC_IDLE/RRC_INACTIVE to inform about the required SIB(s)/posSIB(s), provide Paging related information to the connected L2 U2N Relay UE, and request the SFN-DFN offset from the connected L2 U2N Relay UE. |
| **This procedure is used by the L2 U2N Remote UE in RRC CONNECTED to request the SFN-DFN offset from the connected L2 U2N Relay UE.**<br>5.8.9.8.2 Actions related to transmission of *RemoteUEInformationSidelink* message<br>When entering RRC_IDLE or RRC_INACTIVE, or upon change in any of the information in the *Remote UEInformationSidelink* while in RRC_IDLE or RRC_INACTIVE, the L2 U2N Remote UE shall: |
| <<Unrelated part is omitted>><br>    1> if the UE needs SFN-DFN offset based on the request from upper layers<br>        2> if the *sl-SFN-DFN-OffsetRequested* has not been set in *RemoteUEInformationSidelink* message to the connected L2 U2N relay UE before, and if the connected L2 U2N relay UE set *sfn-DFN-OffsetSupported* to true:<br>            3> include *sl-SFN-DFN-OffsetRequested* in *RemoteUEInformationSidelink* to request SFN-DFN offset.<br>    1> else:<br>        2> set the *sl-SFN-DFN-OffsetRequested* to the value *release* if requested before; |
| <<Unrelated part is omitted>><br>    1> submit the *RemoteUEInformationSidelink* message to lower layers for transmission; |
| <<Unrelated part is omitted>><br>**Upon any change in the need of SFN-DFN offset while in RRC CONNECTED, the L2 U2N Remote UE shall:**<br>    **1> if the UE needs SFN-DFN offset based on the request from upper layers**<br>        **2> if the *sl-SFN-DFN-OffsetRequested* has not been set in *RemoteUEInformationSidelink* message to the connected L2 U2N relay UE before, and if the connected L2 U2N relay UE set *sfn-DFN-Offset-Supported* to true:**<br>            **3> include *sl-SFN-DFN-OffsetRequested* in *RemoteUEInformationSidelink* to request SFN-DFN offset.**<br>    **1> else:**<br>        **2> set the *sl-SFN-DFN-OffsetRequested* to the value *release* if requested before;**<br>    **1> submit the *RemoteUEInformationSidelink* message to lower layers for transmission;** |

- RRCReconfigurationSidelink (operation 945): The relay UE 903 having received the request for SFN-DFN offset information from the remote UE 900 through the RemoteUEInformationSidelink message (e.g., operation 943) may provide the SFN-DFN offset information to the remote UE 900 through the RRCReconfigurationSidelink message. The SFN-DFN offset information in RemoteUEInformationSidelink may be defined as in Table 23 below.

[Table 23]

```
RRCReconfigurationSidelink-v18xy-IEs ::= SEQUENCE {
    sl-SFN-DFN-Offset-r18                    SL-SFN-DFN-Offset-r18
OPTIONAL, -- Need N
    nonCriticalExtension                     SEQUENCE {}
OPTIONAL
}
```

The operation in which the relay UE 903 provides the remote UE 900 with SFN-DFN offset information through RRCReconfigurationSidelink upon the request of the remote UE 900 in operation 943 may be identical or similar to that described in Table 24 below.

[Table 24]

| |
|---|
| 1> if the UE is operating as a L2 U2N Relay UE:<br>    2> if the destination UE requested the SFN-DFN offset in a previous *RemoteUEInformationSidelink* message:<br>        3> if the SFN-DFN offset has changed since a previous transmission of the *RRCReconfigurationSidelink* message, or no previous transmission of the *RRCReconfigurationSidelink* message has occurred since the reception of the *RemoteUEInformationSidelink* message:<br>            4> set the *sl-SFN-DFN-Offset* according to the relation between the SFN timeline of the PCell and the DFN timeline; |

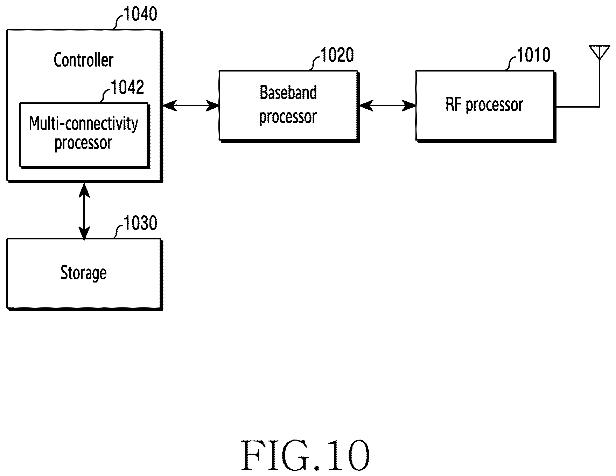

FIG. 10 illustrates a UE device according to an embodiment of the disclosure.

Referring to FIG. 10, the UE may include a radio frequency (RF) processor 1010, a baseband processor 1020, a storage 1030, and a controller 1040. The structure of the UE is not limited to the exemplary structure illustrated in FIG. 10, and the structure of the UE may include a larger or smaller number of components than those of the structure illustrated in FIG. 10.

The RF processor 1010 may perform functions for transmitting and receiving a signal via a wireless channel, such as band conversion and amplification of the signal. For example, the RF processor 1010 may up-convert a baseband signal provided from the baseband processor 1020 to an RF band signal and then transmit the same through an antenna, and may down-convert an RF band signal received through the antenna to a baseband signal. For example, the RF processor 1010 may include, but not limited to, a transmission filter, a reception filter, an amplifier, a mixer, an oscillator, a digital-to-analog converter (DAC), an analog-to-digital converter (ADC), and the like. Although only one antenna is illustrated in FIG. 10, the UE may include multiple antennas. In addition, the RF processor 1010 may include multiple RF chains. Furthermore, the RF processor 1010 may perform beamforming. For the beamforming, the RF processor 1010 may adjust the phase and magnitude of each of signals transmitted and received through multiple antennas or antenna elements. In addition, the RF processor 1010 may perform MIMO, and may receive multiple layers when performing MIMO operations.

The baseband processor 1020 may perform functions of conversion between baseband signals and bitstrings according to the system's physical layer specifications. For example, during data transmission, the baseband processor 1020 may encode and modulate a transmitted bitstring to generate complex symbols. In addition, during data reception, the baseband processor 1020 may demodulate and decode a baseband signal provided from the RF processor 1010 to restore a received bitstring. For example, when following the orthogonal frequency division multiplexing (OFDM) scheme, during data transmission, the baseband processor 1020 may encode and modulate a transmitted bitstring to generate complex symbols, may map the complex symbols to subcarriers, and may configure OFDM symbols through an inverse fast Fourier transform (IFFT) operation and cyclic prefix (CP) insertion. In addition, during data reception, the baseband processor 1020 may split a baseband signal provided from the RF processor 1010 at the OFDM symbol level, may restore signals mapped to subcarriers through a fast Fourier transform (FFT) operation, and may restore a received bitstring through demodulation and decoding.

The baseband processor 1020 and the RF processor 1010 may transmit and receive signals as described above. Therefore, the baseband processor 1020 and the RF processor 1010 may be referred to as a transmitter, a receiver, a transceiver, or a communication unit. Furthermore, at least one of the baseband processor 1020 and the RF processor 1010 may include multiple communication modules to support multiple different radio access technologies. In addition, at least one of the baseband processor 1020 and the RF processor 1010 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands. The UE may transmit/receive a signal with the base station by using the baseband processor 1020 and the RF processor 1010, and the signal may include control information and data.

The storage 1030 may store basic programs, application programs, and data, such as configuration information, for operation of the main base station. For example, the storage 1030 may store basic programs, application programs, and data information, such as configuration information, for the operation of the UE. In addition, the storage 1030 may provide the stored data at the request of the controller 1040.

The storage 1030 may include storage media such as a ROM, a RAM, a hard disk, a CD-ROM, and a DVD, or a combination of storage media. In addition, the storage unit 1030 may be configured by multiple memories. According to an embodiment of the disclosure, the storage 1030 may store programs for performing the handover method according to the disclosure.

The controller 1040 may control the overall operation of the UE. For example, the controller 1040 may transmit/receive signals through the baseband processor 1020 and the RF processor 1010.

In addition, the controller 1040 records data in the storage 1030 and reads the data from the storage 1030. To this end, the controller 1040 may include at least one processor. For example, the controller 1040 may include a communication processor (CP) configured to perform control for communication, and an application processor (AP) configured to control upper layers such as application programs. In addition, according to an embodiment of the disclosure, the controller 1040 may include a multi-connectivity processor 1042 configured to process processes operating in a multi-connectivity mode. In addition, at least one component in the UE may be implemented as a single chip.

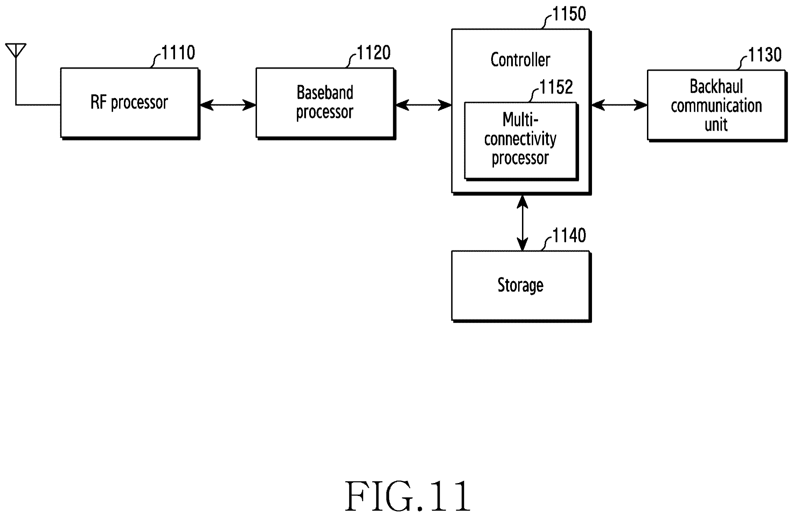

FIG. 11 illustrates a base station device according to an embodiment of the disclosure. The base station in FIG. 11 may be included in the above-described network.

Referring to FIG. 11, the base station may include an RF processor 1110, a baseband processor 1120, a backhaul communication unit 1130, a storage 1140, and/or a controller 1150. The structure of the base station is not limited to the exemplary structure illustrated in FIG. 11, and the structure of the base station may include a larger or smaller number of components than those of the structure illustrated in FIG. 11. The RF processor 1110 may perform functions for transmitting and receiving a signal via a wireless channel, such as band conversion and amplification of the signal. For example, the RF processor 1110 may up-convert a baseband signal provided from the baseband processor 1120 to an RF band signal and then transmit the same through an antenna, and may down-convert an RF band signal received through the antenna to a baseband signal. For example, the RF processor 1110 may include a transmission filter, a reception filter, an amplifier, a mixer, an oscillator, a DAC, and an ADC. Although only one antenna is illustrated in FIG. 11, the RF processing unit 1110 may include multiple antennas. In addition, the RF processor 1110 may include multiple RF chains. Furthermore, the RF processor 1110 may perform beamforming. For the beamforming, the RF processor 1110 may adjust the phase and magnitude of each of signals transmitted and received through multiple antennas or antenna elements. The RF processor 1110 may transmit one or more layers to perform a downward MIMO operation.

The baseband processor 1120 may perform functions of conversion between baseband signals and bitstrings according to the system's physical layer specifications. For example, during data transmission, the baseband processor 1120 may encode and modulate a transmitted bitstring to generate complex symbols. In addition, during data reception, the baseband processor 1120 may demodulate and decode a baseband signal provided from the RF processor 1110 to restore a received bitstring. For example, when following the OFDM scheme, during data transmission, the baseband processor 1120 may encode and modulate a transmitted bitstring to generate complex symbols, may map the complex symbols to subcarriers, and may configure OFDM symbols through an IFFT operation and CP insertion. In addition, during data reception, the baseband processor 1120 may split a baseband signal provided from the RF processor 1110 at the OFDM symbol level, may restore signals mapped to subcarriers through FFT operation, and may restore a received bitstring through demodulation and decoding. The baseband processor 1120 and the RF processor 1110 may transmit and receive signals as described above. Therefore, the baseband processor 1120 and the RF processor 1110 may be referred to as a transmitter, a receiver, a transceiver, a communication unit, or a wireless communication unit. The base station may transmit/receive a signal with the UE by using the baseband processor 1120 and the RF processor 1110, and the signal may include control information and data.

The backhaul communication unit 1130 may provide an interface for communicating with other nodes in the network. For example, the backhaul communication unit 1130 may convert bitstrings transmitted from the main base station to other nodes, for example, an auxiliary base station or a core network, to physical signals, and may convert physical signals received from the other nodes to bitstrings.

The storage 1140 may store basic programs, application programs, and data, such as configuration information, for operation of the main base station. For example, the storage 1140 may store information regarding a bearer allocated to a connected UE, a measurement result reported from the connected UE, and the like. In addition, the storage 1140 may store information serving as a criterion to determine whether to provide multi-connectivity to the UE or to suspend same. In addition, the storage 1140 may provide the stored data at the request of the controller 1150. The storage 1140 may include storage media such as a ROM, a RAM, a hard disk, a CD-ROM, and a DVD, or a combination of storage media. In addition, the storage 1140 may be configured by multiple memories. According to an embodiment of the disclosure, the storage 1140 may store programs for performing the handover method according to the disclosure.

The controller 1150 may control the overall operation of the main base station. For example, the controller 1150 may transmit/receive signals through the baseband processor 1120 and the RF processor 1110 or through the backhaul communication unit 1130. In addition, the controller 1150 records data in the storage 1140 and reads the data from the storage 1140. To this end, the controller 1150 may include at least one processor. In addition, according to an embodiment of the disclosure, the controller 1150 may include a multi-connectivity processor 1152 configured to process processes operating in a multi-connectivity mode.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the disclosure, the term "computer program product" or "computer readable medium" is used to generally refer to a medium such as a memory, a hard disk installed in a hard disk drive, or a signal. The "computer program product" or "computer readable medium" is an element that is provided to a method for reporting UE capability in a wireless communication system according to the disclosure.

The machine-readable storage medium may be provided in the form of a non-transitory storage medium. Herein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium. As an example, the "non-transitory storage medium" may include a buffer in which data is temporarily stored

According to an embodiment, methods according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least a part of the computer program product (e.g., a downloadable app) may be temporarily generated or at least temporarily stored in the machine-readable storage medium, such as memory of the manufacturer's server, a server of the application store, or a relay server.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may also be applied to other communication systems and other variants based on the technical idea of the embodiments may also be implemented. For example, the embodiments may be applied to LTE, 5G, NR, or 6G systems. Therefore, the scope of the disclosure should not be defined as being limited to the embodiments set forth herein, but should be defined by the appended claims and equivalents thereof.

**Claims**

1. A method performed by a first user equipment (UE) in a wireless communication system, the method comprising:

   receiving, from a location management function (LMF) entity, first information requesting an indication of whether the first UE is a remote UE;
   transmitting, to the LMF entity, information indicating that the first UE is the remote UE based on the first information;
   transmitting, to a second UE, second information to request an system frame number-direct frame number (SFN-DFN) offset, in case that the first UE is the remote UE and is in a radio resource control (RRC) connected state; and
   receiving, from the second UE, information on the SFN-DFN offset.

2. The method of claim 1, wherein the first UE is a layer 2 (L2) UE to network (U2N) remote UE, and

wherein the second UE is a L2 U2N relay UE.

3. The method of claim 1, wherein the second information is transmitted in case that the first UE need to the SFN-DFN offset and the second UE supports to the SFN-DFN offset.

4. The method of claim 1, wherein the second information is included in a remote UE information sidelink message.

5. A method performed by a second user equipment (UE) in a wireless communication system, the method comprising:

   receiving, from a first UE, first information to request an system frame number-direct frame number (SFN- DFN) offset; and
   transmitting, to the first UE, information on the SFN-DFN offset.

6. The method of claim 5, wherein the first UE is a layer 2 (L2) UE to network (U2N) remote UE, and wherein the second UE is a L2 U2N relay UE.

7. The method of claim 5, wherein the first information is received in case that the first UE need to the SFN-DFN offset and the second UE supports to the SFN-DFN offset.

8. The method of claim 5, wherein the first information is included in a remote UE information sidelink message.

9. A first user equipment (UE) comprising:

   at least one transceiver;
   at least one processor communicatively coupled to the at least one transceiver; and
   at least one memory, communicatively coupled to the at least one processor, storing instructions executable by the at least one processor individually or in any combination to cause the first UE to:

   receive, from a location management function (LMF) entity, first information requesting an indication of whether the first UE is a remote UE,
   transmit, to the LMF entity, information indicating that the first UE is the remote UE,
   transmit, to a second UE, second information to request an system frame number-direct frame number (SFN-DFN) offset, in case that the first UE is the remote UE and is in a radio resource control (RRC) connected state, and
   receive, from the second UE, information on the SFN-DFN offset.

10. The first UE of claim 9, wherein the first UE is a layer 2 (L2) UE to network (U2N) remote UE, and wherein the second UE is a L2 U2N relay UE.

11. The first UE of claim 9, wherein the second information is transmitted in case that the first UE need to the SFN-DFN offset and the second UE supports to the SFN-DFN offset.

12. The first UE of claim 9, wherein the second information is included in a remote UE information sidelink message.

13. A second user equipment (UE) comprising:

   at least one transceiver;
   at least one processor communicatively coupled to the at least one transceiver; and
   at least one memory, communicatively coupled to the at least one processor, storing instructions executable by the at least one processor individually or in any combination to cause the second UE to:

   receive, from a first UE, first information to request an system frame number-direct frame number (SFN-DFN) offset, and
   transmit, to the first UE, information on the SFN-DFN offset.

14. The second UE of claim 13, wherein the first UE is a layer 2 (L2) UE to network (U2N) remote UE, and wherein the second UE is a L2 U2N relay UE.

15. The second UE of claim 13, wherein the first information is received in case that the first UE need to the SFN-DFN offset and the second UE supports to the SFN-DFN offset.

FIG.1

UE                                    eNB/gNB

| PDCP | ~205 |
| RLC  | ~210 |
| MAC  | ~215 |
| PHY  | ~220 |

| PDCP | ~240 |
| RLC  | ~235 |
| MAC  | ~230 |
| PHY  | ~225 |

# FIG.2

| 300 | 305 | 310 | 315 |
|-----|-----|-----|-----|
| UE | NG-RAN Node | AMF | LMF |

FIG.3

FIG.4

FIG.5

FIG.6

FIG.7

EP 4 734 622 A1

FIG.8

39

FIG.9

FIG.10

FIG.11

## INTERNATIONAL SEARCH REPORT

| International application No. |
| --- |
| **PCT/KR2024/008077** |

| A. | CLASSIFICATION OF SUBJECT MATTER |
| --- | --- |

**H04W 64/00**(2009.01)i; **G01S 5/00**(2006.01)i; **H04W 48/14**(2009.01)i; **H04W 56/00**(2009.01)i; **H04W 88/04**(2009.01)i; **H04W 92/18**(2009.01)i

According to International Patent Classification (IPC) or to both national classification and IPC

| B. | FIELDS SEARCHED |
| --- | --- |

Minimum documentation searched (classification system followed by classification symbols)

H04W 64/00(2009.01); H04W 4/46(2018.01); H04W 56/00(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 위치 추정(location estimation), LMF(location management function), 리모트 (remote) UE, RRC(radio resource control), SFN(system frame number)-DFN(direct frame number), 오프셋(offset), L2(layer 2) U2N(UE to network)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | MEDIATEK INC. et al. Positioning of remote UEs. R2-2303559, 3GPP TSG-RAN WG2#121bis-e. 07 April 2023.<br>See pages 1-2 and 13-16; and figure 5.8.9.8.1-1. | 1-15 |
| A | MEDIATEK INC. et al. Positioning of remote UEs. R2-2301649, 3GPP TSG-RAN WG2#121. Athens, Greece. 17 February 2023.<br>See sections 2.2-2.3. | 1-15 |
| A | MEDIATEK INC. et al. Downlink positioning support and posSIB request for L2 UE-to-network remote UE (Alt 2) [PosL2RemoteUE]. R2-2301653, 3GPP TSG-RAN WG2 Meeting #121. Athens, Greece. 17 February 2023.<br>See pages 1-4. | 1-15 |
| A | US 2019-0289561 A1 (QUALCOMM INCORPORATED) 19 September 2019 (2019-09-19)<br>See paragraphs [0006]-[0009]; and claims 1-3. | 1-15 |

☑ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **20 September 2024** | **20 September 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/008077** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2023-0003465 A (LG ELECTRONICS INC.) 06 January 2023 (2023-01-06)<br>See paragraphs [0212]-[0241]. | 1-15 |

Form PCT/ISA/210 (second sheet) (July 2022)

**INTERNATIONAL SEARCH REPORT**
Information on patent family members

International application No.

**PCT/KR2024/008077**

| Patent document cited in search report | | | Publication date (day/month/year) | Patent family member(s) | | | Publication date (day/month/year) |
|---|---|---|---|---|---|---|---|
| US | 2019-0289561 | A1 | 19 September 2019 | CN | 111886908 | A | 03 November 2020 |
| | | | | CN | 111886908 | B | 22 March 2022 |
| | | | | EP | 3747221 | A1 | 09 December 2020 |
| | | | | EP | 3747221 | B1 | 19 January 2022 |
| | | | | US | 10470143 | B2 | 05 November 2019 |
| | | | | WO | 2019-177848 | A1 | 19 September 2019 |
| KR | 10-2023-0003465 | A | 06 January 2023 | US | 2023-0152413 | A1 | 18 May 2023 |
| | | | | WO | 2021-215771 | A1 | 28 October 2021 |

Form PCT/ISA/210 (patent family annex) (July 2022)